# EUROPEAN PATENT APPLICATION

(11) **EP 4 394 293 A1**
(43) Date of publication of application: **03.07.2024**
(21) Application number: 22383324.5
(22) Date of filing: 30.12.2022
(51) Int. Cl.: F25J 1/00, F25J 1/02, F25J 3/02

(54) **PLANT AND METHOD TO OBTAIN LIQUID CARBON DIOXIDE AND LIQUID METHANE FROM A GAS MIXTURE**

(71) Applicant: CRYO INOX, S.L., 08213 Polinyà (ES)
(72) Inventor: CALLEJÓN AGRAMUNT, Ismael, 08181 SENTMENAT (ES); FORNS FARRÚS, Sergi, 08320 EL MASNOU (ES); MONTAÑA FAIGET, Àngels, 43000 ASCÓ (ES); CALLEJÓN ÁLVAREZ, Júlia, 08181 SENTMENAT (ES); CALLEJÓN ÁLVAREZ, Carles, 08181 SENTMENAT (ES)
(74) Representative: ZBM Patents - Zea, Barlocci & Markvardsen

(57) **Abstract**

In one aspect, a plant to obtain liquid methane from a gas mixture is provided. The gas mixture comprises CO₂ and CH₄.The plant comprises a cryogenic unit, a CO₂ separation unit, a CH₄ separation unit, a polishing unit, and a CH₄ storage unit.

In a further aspect, a method of obtaining liquid methane from a gas mixture is provided.

## Description

The present disclosure relates to plants and methods for obtaining liquid carbon dioxide and liquid methane from a gas mixture.

### BACKGROUND

Biogas refers to a mixture of different gases produced by the breakdown of organic matter in facilities or plants such as solid waste landfills, wastewater treatment plants, or other anaerobic digesters.

Biogas comprises a portion of methane CH₄ (generally 55% mol - 65% mol of the biogas), a portion of carbon dioxide CO₂ (generally 45% mol - 35% mol of the biogas), and lesser portions of other compounds (e.g., water H₂O, hydrogen sulfide H₂S).

CO₂ should be at least partially removed from the biogas because the presence of CO₂ may reduce the heating value of the biogas. Removal of the portion of CO₂ from the biogas raises the biogas's CH₄ content, resulting in a gas that is upgraded with improved heating value.

Similarly, CO₂ should be at least partially removed from a gas mixture comprising a portion of methane CH₄ (for example 55% mol - 65% mol of the gas mixture), a portion of carbon dioxide CO₂ (for example 45% mol - 35% mol of the gas mixture). The aforementioned gas mixture may be e.g., biogas, biomethane, or natural gas depending on its origin (i.e., respectively a renewable source or a fossil source).

On the one hand, gas (i.e., biogas, or natural gas) upgrading may involve separation of CH₄ and other compounds within the gas mixture by passing the gas mixture (to be upgraded) through e.g., various combinations of single-use adsorbent or scavenger beds, pressure-swing adsorption (PSA) systems, temperature-swing adsorption (TSA) systems, membranes, or physical solvent-based absorbers. Gas upgrading and subsequent CO₂ removal may involve plants having complex systems with a high equipment count. Therefore, the implementation cost and the operation cost of these plants are high.

CO₂ is typically separated in a gaseous phase from the gas mixture (to be upgraded). Therefore, subsequent liquefaction of CO₂ is needed for the storage or transport of the CO₂ which increases the energy cost of these plants.

On the other hand, CO₂ can also be separated from the gas mixture by chemical solvent-based absorbers e.g., chemical absorption by reactive amine-based solvents such as monoethanolamine (MEA) or diethanolamine (DEA). These processes present the drawback that the portion of CO₂ from the gas mixture (to be upgraded) contacted with the amine-based solvents must be subsequently separated from the amine-based solvents. Therefore, the portion of CO₂ separated from the gas mixture cannot be directly liquefied or used for e.g., freezing and chilling of food products; carbonation of beverages; water treatment; low temperature testing of aviation and electronic components; oil and gas well stimulations; and controlling chemical reactions. Consequently, plants using amine-based solvents for separating CO₂ from the gas mixture (to be upgraded) may include additional systems that are energy intensive for obtaining liquid CO₂. As a result, these plants are more energy intensive.

In summary, gas upgrading involves separation and recovery of e.g., CH₄, or CO₂ from a gas mixture which is energy intensive and an expensive process operation.

Liquefaction of the upgraded gas involves cooling the methane to a temperature to which the CH₄ is in liquid phase. However, at these temperatures, the CO₂ comprised within the upgraded gas (up to 4% mol of CO₂ within the upgraded gas) is at least in part in solid phase. Consequently, if the upgraded gas is liquefied and stored, the stored liquid biomethane will comprise a high amount of carbon dioxide in solid phase which may damage the plant, hinder the transport of liquefied biomethane or even prevent the posterior use of the liquid biomethane.

Therefore, it is required to decrease the amount of CO₂ within the upgraded gas prior to the liquefaction of the upgraded gas.

Currently, to decrease the amount of CO₂ within the upgraded gas prior to the liquefaction of the upgraded gas, PSA systems or TSA systems may be used. However, PSA systems or TSA systems involve selectively adsorbing CO₂ and / or adsorbing contaminants of the upgraded gas onto adsorbent particles, and allowing a resulting polished gas to pass through the PSA systems or TSA systems.

Upon operation of the PSA systems or TSA systems, the adsorbent particles may become saturated with the contaminants and may lose ability to adsorb beyond a maximum amount. Before more contaminants may be removed from the upgraded gas, the adsorbent particles must be regenerated. This normally involves exposing the saturated particles to high temperatures, and to gas streams that have low concentrations of CO₂ or low concentrations of the contaminants to promote desorption of CO₂ or desorption of the contaminants from the adsorbent particles.

For example, PSA systems may require a supply of a clean gas (i.e., with low concentrations of CO₂ or low concentrations of the contaminants). In PSA systems, 10 to 15% of the gas mixture stream may be used to regenerate the PSA systems. Consequently, PSA systems may involve a high CH₄ spillage. CH₄ slippage should be avoided because CH₄ is a greenhouse gas with a high global warming potential, up to 30 times higher than carbon dioxide's global warming potential. Furthermore, CH₄ slippage is an amount of CH₄ gas that is lost and that will not be available to provide e.g., energy. As a result, PSA systems may be very expensive and energy intensive for recovering CH₄ from gas mixture.

In summary, CO₂ should be at least partially further removed from the upgraded gas. Removal of the portion of CO₂ from the upgraded gas raises the upgraded gas' CH₄ content, resulting in a gas that is polished. Furthermore, CO₂ must be removed to less than 50 ppm from the upgraded gas to allow the liquefaction of the polished gas comprising less than 50 ppm of CO₂.

Currently, CO₂ is typically separated in a gaseous phase from the upgraded gas (to be polished). Therefore, subsequent liquefaction of CH₄ is needed for the storage or transport of the CH₄ which increases the energy cost of these plants.

In summary, obtaining liquid CH₄ currently involves separation and / or recovery of e.g., CH₄, or CO₂ from the upgraded gas which is energy intensive and an expensive process operation. Plants may comprise both separation systems for gas polishing and systems for liquefaction of CH₄ because the CH₄ is separated from the upgraded gas in gaseous state, and these plants may therefore have an increased plant footprint.

Examples of the present disclosure seek to at least partially reduce one or more of the aforementioned problems.

### SUMMARY

In one aspect, a plant to obtain liquid methane from a gas mixture is provided. The gas mixture comprises CO₂ and CH₄. The plant comprises a cryogenic unit, a CO₂ separation unit, a CH₄ separation unit, a polishing unit, and a CH₄ storage unit. The cryogenic unit comprises a first inlet to receive the gas mixture to be upgraded with a pressure comprised between 30 barg and 50 barg; and a first outlet to exit the gas mixture to a first predetermined temperature comprised between - 70°C and - 50°C to which the cryogenic unit is configured to cool the gas mixture to be upgraded. The CO₂ separation unit is in fluid communication with the first outlet of the cryogenic unit. The CO₂ separation unit comprises a first CO₂ exit line and a first CH₄ exit line. The CO₂ separation unit is configured to separate at least part of the CO₂ in liquid phase from the cooled gas mixture, and to exit a first CO₂ rich stream comprising liquid CO₂ through the first CO₂ exit line; and a first CH₄ rich stream comprising a portion of gaseous CH₄ and a portion of gaseous CO₂ through the first CH₄ exit line. The CH₄ separation unit is in fluid communication with the CO₂ separation unit through the first CH₄ exit line. The CH₄ separation unit comprises a second CO₂ exit line and a second CH₄ exit line. The CH₄ separation unit is configured to separate at least part of the CO₂ from the first CH₄ rich stream; and to exit a second CO₂ rich stream comprising a preponderant portion of gaseous CO₂, through the second CO₂ exit line; and a second CH₄ rich stream comprising a final portion of the gaseous CH₄, wherein the final portion of the gaseous CH₄ is greater than or equal to 96% mol of the second CH₄ rich stream, through the second CH₄ exit line. The second CH₄ exit line is in fluid communication with a second inlet of the cryogenic unit whereby the second inlet receives the second CH₄ rich stream to be polished; and wherein a second outlet of the cryogenic unit exits the second CH₄ rich stream to a second predetermined temperature comprised between - 105°C and - 90°C to which the cryogenic unit is configured to cool the second CH₄ rich stream. The polishing unit comprises a heat exchanger with an inlet and an outlet, the inlet of the heat exchanger in fluid communication with the second outlet of the cryogenic unit. Furthermore, the heat exchanger is configured: to cool the cooled second CH₄ rich stream to a third predetermined temperature comprised between - 160°C and - 145°C, and to separate at least part of the CO₂ in solid phase from the cooled second CH₄ rich stream; and to exit a third CH₄ rich stream comprising liquid CH₄, through a third CH₄ exit line. The CH₄ storage unit comprises an inlet and an outlet. The inlet of the CH₄ storage unit is in fluid communication with the polishing unit, through the third CH₄ exit line. The CH₄ storage unit receives the third CH₄ rich stream comprising liquid CH₄ and stores the liquid CH₄.

This configuration of the plant allows to efficiently obtain and store liquid CH₄ (i.e., liquid gas mixture which is upgraded and polished).

The cryogenic unit cools the gas mixture (to be upgraded) to the first predetermined temperature whereby the gas mixture comprises a portion of CH₄ and a portion of CO₂. The CO₂ separation unit receives the cooled gas mixture and separates at least part of the CO₂ in liquid phase from the cooled gas mixture. It is possible to achieve upgrading of the gas mixture with suitable ranges of temperature and pressure. Removal of the portion of CO₂ from the gas mixture raises the gas mixture's CH₄ content, resulting in the first CH₄ rich stream

For example, it is possible to achieve upgrading of the gas mixture with suitable ranges of temperature and pressure. In some examples, the first predetermined temperature to which the cryogenic unit is configured to cool the gas mixture to be upgraded, may be comprised between - 60°C and - 50°C.

In some of these examples, a pressure to which the cryogenic unit is configured to receive the gas mixture to be upgraded, may be comprised between 36 barg and 39 barg.

Consequently, the first CH₄ rich stream may be fed to the CH₄ separation unit through the first CH₄ exit line. The CH₄ separation unit is configured to separate at least part of the CO₂ from the first CH₄ rich stream. Therefore, further removal of the portion of CO₂ from the first CH₄ rich stream may be achieved. As a result, it is possible to obtain the second CH₄ rich stream comprising a final portion of the gaseous CH₄, wherein the final portion of the gaseous CH₄ is greater than or equal to 96% mol of the second CH₄ rich stream, through the second CH₄ exit line. Thus, an upgraded gas (i.e., the second CH₄ rich stream) may be obtained without CH₄ spillage.

It may be noted that the second CH₄ rich stream is a gas stream to be polished.

To that end, the cryogenic unit cools the second CH₄ rich stream to the second predetermined temperature whereby the cooled second CH₄ rich stream comprises a portion of CH₄ in liquid phase and a portion of CO₂ in liquid phase or in gaseous phase.

The polishing unit further cools the second CH₄ rich stream that is cooled by the cryogenic unit, to the third predetermined temperature. The cooled second CH₄ rich stream that is further cooled by the operation of the polishing unit, comprises the portion of CH₄ in liquid phase and the portion of CO₂ in solid phase. Therefore, it is possible to trap solidified CO₂ within the heat exchanger of the polishing unit. As a result, the third CH₄ rich stream comprising liquid CH₄, may be exited from the polishing unit through the third CH₄ exit line.

Consequently, it is possible to operate the plant to polish the second CH₄ rich stream with no additional phase change (e.g., from gaseous phase to liquid phase) of the CH₄ during gas polishing (e.g., removal of CO₂ from the second CH₄ rich stream to be polished) and liquefaction of the CH₄ because the CH₄ may be directly obtained in liquid phase and because of the different solidification temperature between the CO₂ and the CH₄ for the operating pressure (as will be explained later on). Therefore, the plant may comprise fewer parts and allows to implement simpler systems while directly obtaining liquid CH₄ (which is polished).

It may be noted that the third CH₄ rich stream comprising liquid CH₄, may be exited from the polishing unit through the third CH₄ exit line, and directly supplied to a CH₄ unit to operate the CH₄ in liquid phase (e.g., the grid, or the CH₄ storage unit).

In some examples, the third CH₄ rich stream may comprise a final portion of liquid CH₄, and a final portion of CO₂ wherein the final portion of CO₂ is less than or equal to 50 ppm of CO₂. The CO₂ may be in gaseous phase or in liquid phase.

In some examples, the plant may comprise a dehydration unit coupled to the cryogenic unit, the dehydration unit configured to remove moisture from the gas mixture to be upgraded so that the gas mixture to be upgraded comprises 1 ppm of H₂O or less than 1 ppm of H₂O. In some of these examples, the gas mixture to be upgraded may be received by the dehydration unit with a pressure comprised between 0.2 barg and 15 barg.

In some of these examples, the dehydration unit may comprise one or more adsorbers configured to reduce an H₂O content of the gas mixture to be upgraded, to a final H₂O content which is less than or equal to 1 ppm of H₂O. The one or more adsorbers (e.g., zeolite or alumina-based adsorbents) may be loaded with adsorbents capable of reversibly adsorbing the H₂O of the gas mixture. The one or more adsorbers may be selected to achieve that the gas mixture to be upgraded comprises 1 ppm of H₂O or less than 1 ppm of H₂O.

In some of these examples, the dehydration unit may comprise an inlet and an outlet. The inlet of the dehydration unit may be configured to receive the gas mixture to be upgraded; and the outlet of the dehydration unit may be fluidically connected to the first inlet of the cryogenic unit so that the gas mixture to be upgraded that is fed to the cryogenic unit comprises 1 ppm of H₂O or less than 1 ppm of H₂O. Therefore, a reduced amount of water may enter the cryogenic unit. Consequently, a reduced amount of solidified water, which can damage any element of the plant, may go through the units. As a result, wear may thus be reduced, and shutdown of the plant for maintenance may be avoided.

In some examples, the CO₂ separation unit may comprise a flash tank and a distillation column. The flash tank may comprise a flash tank inlet, a first flash tank outlet, and a second flash tank outlet. The flash tank inlet may be in fluid communication with the first outlet of the cryogenic unit whereby the flash tank inlet may receive the gas mixture to be upgraded. The first flash tank outlet may exit a first flash tank stream from the flash tank through a CO₂ rich flash tank exit line, the first flash tank stream comprising a portion of liquid CO₂ and a portion of liquid CH₄, wherein the portion of liquid CO₂ is greater than the portion of liquid CH₄. The second flash tank outlet may exit a second flash tank stream from the flash tank through a CH₄ rich flash tank exit line, the second flash tank stream comprising a portion of gaseous CH₄ and a portion of gaseous CO₂; wherein the portion of gaseous CH₄ is greater than the portion of gaseous CO₂. Furthermore, the distillation column may comprise a distillation column inlet in fluid communication with the first flash tank outlet through the CO₂ rich flash tank exit line, the distillation column inlet to receive the first flash tank stream. The first distillation column outlet may exit the first CO₂ rich stream from the distillation column through the first CO₂ exit line, the first CO₂ rich stream comprising a final portion of liquid CO₂, wherein the final portion of the liquid CO₂ is greater than or equal to 99.9% mol of the first CO₂ rich stream. The second distillation column outlet may exit the first CH₄ rich stream from the distillation column through the first CH₄ exit line, the first CH₄ rich stream comprising the portion of gaseous CH₄ and the portion of CO₂ through the first CH₄ exit line, wherein the portion of gaseous CH₄ is greater than the portion of gaseous CO₂.

In some examples, the flash tank may be configured to receive the gas mixture to be upgraded with the temperature comprised between - 70°C and - 50°C; and the pressure comprised between 30 barg and 50 barg; recover the first flash tank stream from the flash tank through the CO₂ rich flash tank exit line, the first flash tank stream comprising a portion of liquid CO₂ and a portion of liquid CH₄, wherein the portion of liquid CO₂ is greater than the portion of liquid CH₄; and the second flash tank stream from the flash tank through the CH₄ rich flash tank exit line, the second flash tank stream comprising a portion of gaseous CH₄ and a portion of gaseous CO₂; wherein the portion of gaseous CH₄ is greater than the portion of gaseous CO₂. The distillation column may be fluidically connected to the flash tank through the CO₂ rich flash tank exit line. The distillation column may be configured to receive the first flash tank stream through the CO₂ rich flash tank exit line; and recover: the first CO₂ rich stream from the distillation column through the first CO₂ exit line, the first CO₂ rich stream comprising a final portion of the liquid CO₂, wherein the final portion of the liquid CO₂ is greater than or equal to 99.9% mol of the first CO₂ rich stream ; and the first CH₄ rich stream from the distillation column through the first CH₄ exit line, the first CH₄ rich stream comprising the portion of gaseous CH₄ and the portion of CO₂ through the first CH₄ exit line, wherein the portion of gaseous CH₄ is greater than the portion of gaseous CO₂. Therefore, the plant may comprise fewer parts and may allow to implement simpler systems while obtaining a food grade liquid CO₂ (i.e., at least 99.9% mol of the first CO₂ rich stream comprises CO₂, impurities such as CH₄, H₂S, H₂O up to 1% mol of the first CO₂ rich stream may remain), and off-gases streams (e.g., the second flash tank stream, or the first CH₄ rich stream) which may be further upgraded by the CH₄ separation unit and / or polished by the polishing unit.

In some examples, the temperature to which the gas mixture to be upgraded is received by the flash tank, may be comprised between - 60°C and - 50°C.

In some of these examples, the CO₂ separation unit may be configured to receive the gas mixture to be upgraded with a pressure comprised between 30 barg and 50 barg, for example between 36 barg and 39 barg.

The configuration of operating pressure and operating temperature to which the CO₂ separation unit is configured to receive the gas mixture to be upgraded, may be selected to achieve selective separation of CO₂ from CH₄ because of different liquefaction temperature between the CO₂ and the CH₄ for the operating pressure. Surprisingly, at these operating temperatures (e.g., - 60°C < t < - 50°C) and at the operating pressures (e.g., 36 barg < p < 39 barg), the energy cost of the separation of CO₂ from the gas mixture to be upgraded (and therefore, the energy cost of the upgraded gas) may be decreased. As a result, a plant with reduced energy consumption may be obtained.

In this configuration of operating temperatures and operating pressures, the first CO₂ rich stream comprising liquid CO₂, and exiting the CO₂ separation unit through the first CO₂ exit line may be at a temperature comprised between 2°C and 5°C.

In some examples, the first CO₂ rich stream exiting the CO₂ separation unit through the first CO₂ exit line may be further cooled by the cryogenic unit that cooled the gas mixture to be upgraded. The temperature to which the cryogenic unit is configured to cool the first CO₂ rich stream may be a suitable temperature for directly feeding a CO₂ unit to operate the CO₂ in liquid phase.

In some examples, the first CO₂ exit line may be in fluid communication with a third inlet of the cryogenic unit. The third inlet of the cryogenic unit may receive the first CO₂ rich stream. Furthermore, a third outlet of the cryogenic unit may exit the first CO₂ rich stream to a fourth predetermined temperature to which the cryogenic unit is configured to cool the first CO₂ rich stream. In some of these examples, the plant may comprise a CO₂ storage unit in fluid communication with the third outlet of the cryogenic unit. The CO₂ storage unit may receive the cooled first CO₂ rich stream comprising liquid CO₂ and may store the liquid CO₂. Hence, the fourth predetermined temperature to which the cryogenic unit is configured to cool the first CO₂ rich stream, may be comprised between - 40°C and - 25°C, and for example - 30°C. Therefore, separation of CO₂ from the gas mixture to be upgraded and retrieval of liquefied CO₂ may be achieved in a single unit (i.e., the CO₂ separation unit). As a result, storage or transport of the liquid CO₂ may be achieved with a reduced energy cost. In addition, the plant may have a reduced plant footprint (i.e., the space needed for implementing the plant is reduced).

In some examples, the CH₄ separation unit may comprise a membrane upgrading unit to be fed with the second flash tank stream through the CH₄ rich flash tank exit line and / or to be fed with the first CH₄ rich stream through the first CH₄ exit line. In these examples, the second flash tank stream exiting the flash tank through the CH₄ rich flash tank exit line and / or the first CH₄ rich stream exiting the distillation column through the first CH₄ exit line may be heated by the cryogenic unit that cooled the gas mixture to be upgraded prior to being fed to the membrane upgrading unit.

The configuration of the membrane upgrading unit with the cryogenic unit may allow to efficiently increase the content of CH₄ of a stream comprising the second flash tank stream and / or the first CH₄ rich stream. The membrane upgrading unit may be fluidically connected to the CO₂ separation unit through the CH₄ rich flash tank exit line and / or through the first CH₄ exit line. In this configuration, the cryogenic unit that cooled the gas mixture to be upgraded may heat the second flash tank stream and I or the first CH₄ rich stream before the second flash tank stream and I or the first CH₄ rich stream may be fed to the membrane upgrading unit. As a result, the membrane upgrading unit may receive a CH₄ rich stream (i.e., the second flash tank stream and / or the first CH₄ rich stream) at a suitable temperature for the operation of the membrane upgrading unit.

In some of these examples, the membrane upgrading unit may be configured to receive the second flash tank stream through the CH₄ rich flash tank exit line and / or the first CH₄ rich stream through the first CH₄ exit line. The second flash tank stream and / or the first CH₄ rich stream may be: at a temperature comprised between 10°C and 25°C; and at a pressure comprised between 30 barg and 50 barg. Furthermore, the membrane upgrading unit may be further configured to: separate at least part of the CO₂ from the second flash tank stream and / or the first CH₄ rich stream; and output the second CH₄ rich stream and the second CO₂ rich stream. Therefore, an upgraded methane stream (i.e., the gaseous CH₄ of the second CH₄ rich stream with a final portion of gaseous CH₄ greater than or equal to 96% mol) may readily be injected into the grid for its use or supplied to the polishing unit.

In some of these examples, the dehydration unit may be fluidically connected to the membrane upgrading unit through the second CO₂ exit line; and the dehydration unit may be at least partially fed with the second CO₂ rich stream through the second CO₂ exit line. Therefore, there may be a feedback line from the membrane upgrading unit to the dehydration unit so that streams that are still CO₂ rich (i.e., streams comprising a preponderant portion of CO₂) may be fed to the dehydration unit to start over the process of separation and liquefaction of CO₂, and CH₄ gas upgrading. It may be noted that in some of these examples, the membrane upgrading unit may be in fluid connection with a compression unit through the second CO₂ exit line. The compression unit may comprise a compressor. The compression unit may be configured to compress the second CO₂ rich stream to a pressure comprised between 30 barg and 50 barg. Furthermore, the compression unit may be in fluid connection with the cryogenic unit. Therefore, the second CO₂ rich stream may be fed to the cryogenic unit at a pressure comprised between 30 barg and 50 barg. As a result, the plant may separate substantially all the portion of CO₂ comprised in the gas mixture to be upgraded without spilling or losses of the portion of CO₂ during gas upgrading, or during separation and liquefaction of the CO₂. Furthermore, contrary to plants using amine-based solvents for separating CO₂ from the gas mixture (to be upgraded), there may be no additional systems that are energy intensive for obtaining a CH₄ rich stream comprising a final portion of the gaseous CH₄, wherein the final portion of the gaseous CH₄ is greater than or equal to 96% mol of the second CH₄ rich stream without spillage of CH₄.

Similarly, in some examples, the CH₄ separation unit may comprise a cryo-upgrading unit comprising a heat exchanger with an inlet and an outlet, the inlet of the heat exchanger in fluid communication with the CO₂ separation unit through the CH₄ rich flash tank exit line and / or through the first CH₄ exit line.

The configuration of the cryo-upgrading unit may allow to efficiently increase the content of CH₄ of a stream comprising the second flash tank stream and / or the first CH₄ rich stream. The heat exchanger may be configured to: receive the second flash tank stream through the CH₄ rich flash tank exit line and / or the first CH₄ rich stream through the first CH₄ exit line; cool the cooled second flash tank stream and / or the cooled first CH₄ rich stream to a fifth predetermined temperature comprised between - 100°C and - 50°C. Furthermore, the heat exchanger may be further configured to: separate at least part of the CO₂ in solid phase from the second flash tank stream and / or the first CH₄ rich stream; and exit: the second CO₂ rich stream through the second CO₂ exit line; and the second CH₄ rich stream through the second CH₄ exit line.

Therefore, an upgraded methane stream (i.e., the gaseous CH₄ of the second CH₄ rich stream with a final portion of gaseous CH₄ greater than or equal to 96% mol) may readily be injected into the grid for its use or supplied to the polishing unit.

Referring to the polishing unit, it is possible to achieve polishing of the second CH₄ rich stream with suitable ranges of temperature and pressure.

In some examples, the second predetermined temperature to which the cryogenic unit is configured to cool the second CH₄ rich stream to be polished, may be about - 100°C. In this example, the second predetermined temperature may not deviate from - 100°C by more than 1 °C. In some of these examples, a pressure to which the cryogenic unit is configured to receive the second CH₄ rich stream to be polished, may be comprised between 36 barg and 39 barg.

In some examples, the third predetermined temperature to which the polishing unit is configured to further cool the cooled second CH₄ rich stream to be polished, may be about - 150°C. In this example, the third predetermined temperature may not deviate from - 150°C by more than 1 °C. In some of these examples, the polishing unit may be configured to receive the cooled second CH₄ rich stream (by the cryogenic unit) with a pressure comprised between 30 barg and 50 barg, for example between 36 barg and 39 barg.

The configuration of operating pressure to which the polishing unit is configured to receive the cooled second CH₄ rich stream and the operating temperature to which the polishing unit is configured to further cool the cooled second CH₄ rich stream, may be selected to achieve selective separation of CO₂ from CH₄ because of different solidification temperature between the CO₂ and the CH₄ for the operating pressure. Surprisingly, at these operating temperatures (e.g., - 105°C < t < - 90°C) and at the operating pressures (e.g., 36 barg < p < 39 barg), the energy cost of liquefaction and the separation of CO₂ from the liquid CH₄ of the second CH₄ rich stream to be polished may be decreased.

Consequently, a third CH₄ rich stream comprising a final portion of liquid CH₄, and a final portion of liquid CO₂ wherein the final portion of the liquid CO₂ is less than or equal to 50 ppm of CO₂, may be obtained. Therefore, separation of CO₂ from the third CH₄ rich stream to be polished and retrieval of liquefied CH₄ may be achieved in a single unit (i.e., the polishing unit). As a result, subsequent storage of, subsequent transport of, or subsequent use of the liquid CH₄ may be achieved with a reduced energy cost. In addition, the plant may have a reduced plant footprint (i.e., the space needed for implementing the space is reduced).

In some examples, the polishing unit may exit a third CO₂ rich stream comprising a portion of the CO₂ in liquid phase or gaseous phase and a portion of CH₄, through a third CO₂ exit line. In some of these examples, there may be a feedback line from the polishing unit to the dehydration unit so that streams that are still CO₂ rich (i.e., streams comprising a preponderant portion of CO₂ such as the third CO₂ rich stream) may be fed to the dehydration unit to start over the process of separation and liquefaction of CO₂, and CH₄ gas upgrading.

Referring to the CH₄ storage unit, the CH₄ storage unit may comprise a pressure-reducing device in fluid communication with the polishing unit through the third CH₄ exit line, and a tank in fluid communication with the pressure-reducing device. The pressure-reducing device may be configured to expand the third CH₄ rich stream to a pressure comprised between 1 barg and 5 barg. In these examples, the pressure-reducing device may be e.g., a Joule Thomson valve. In some of these examples, when the third CH₄ rich stream is expanded to the pressure comprised between 1 barg and 5 barg, the liquid CH₄ may be subcooled (e.g., more than 3 °C subcooled with respect to the equilibrium temperature at the pressure of the storage unit). Therefore, the liquid gas mixture that is polished (i.e., the liquid CH₄ with up to 50 ppm of CO₂) may readily be supplied to the CH₄ storage unit.

In a further aspect, a method of obtaining liquid methane from a gas mixture is provided. The method comprises obtaining a gas mixture to be upgraded, the gas mixture to be upgraded comprising 1 ppm of H₂O or less than 1 ppm of H₂O; feeding the gas mixture to a cryogenic unit and cooling to a first predetermined temperature the gas mixture to be upgraded; feeding the cooled gas mixture to a CO₂ separation unit for separating at least part of the CO₂ in liquid phase from the cooled gas mixture; recovering a first CO₂ rich stream comprising liquid CO₂ from the CO₂ separation unit through a first CO₂ exit line; recovering a first CH₄ rich stream comprising a portion of gaseous CH₄ and a portion of gaseous CO₂ from the CO₂ separation unit through a first CH₄ exit line; feeding the first CH₄ rich stream to a CH₄ separation unit for separating at least part of the CO₂ from the first CH₄ rich stream: recovering a second CO₂ rich stream comprising a preponderant portion of gaseous CO₂, through the second CO₂ exit line; recovering a second CH₄ rich stream comprising a final portion of the gaseous CH₄, wherein the final portion of the gaseous CH₄ is greater than or equal to 96% mol of the second CH₄ rich stream, through the second CH₄ exit line; feeding the second CH₄ rich stream to the cryogenic unit and cooling to a second predetermined temperature the second CH₄ rich stream; feeding the cooled second CH₄ rich stream to a polishing unit to cool the cooled second CH₄ rich stream to a third predetermined temperature; simultaneously liquefying and polishing the second CH₄ rich stream by separating at least part of the CO₂ in solid phase from the second CH₄ rich stream cooled to the third predetermined temperature; and recovering a third CH₄ rich stream comprising liquid CH₄, through a third CH₄ exit line.

According to this aspect, a method of obtaining liquid methane (i.e., liquid gas mixture which is upgraded and polished) is provided in which the cryogenic unit cools the gas mixture (to be upgraded) to the first predetermined temperature whereby the gas mixture comprises a portion of CH₄ and a portion of CO₂. The CO₂ separation unit receives the cooled gas mixture and separates at least part of the CO₂ in liquid phase from the cooled gas mixture. It is possible to achieve upgrading of the gas mixture with suitable ranges of temperature and pressure. Removal of the portion of CO₂ from the gas mixture raises the gas mixture's CH₄ content, resulting in the first CH₄ rich stream. Therefore, the first CH₄ rich stream may be fed to the CH₄ separation unit through the first CH₄ exit line. The CH₄ separation unit is configured to separate at least part of the CO₂ from the first CH₄ rich stream. Further removal of the portion of CO₂ from the first CH₄ rich stream may thus be achieved. As a result, it is possible to obtain the second CH₄ rich stream comprising a final portion of the gaseous CH₄, wherein the final portion of the gaseous CH₄ is greater than or equal to 96% mol of the second CH₄ rich stream, through the second CH₄ exit line. Thus, an upgraded gas (i.e., the second CH₄ rich stream) may be obtained without CH₄ spillage.

Further according to this aspect, the second CH₄ rich stream may be a gas stream to be polished. The cryogenic unit cools the second CH₄ rich stream to the second predetermined temperature. The polishing unit further cools the second CH₄ rich stream that is cooled by the cryogenic unit, to the third predetermined temperature. The cooled second CH₄ rich stream that is further cooled by the operation of the polishing unit, comprises the portion of CH₄ in liquid phase and the portion of CO₂ in solid phase. As a result, the third CH₄ rich stream comprising liquid CH₄, may be exited from the polishing unit through the third CH₄ exit line.

Consequently, it is possible to operate the plant to polish the second CH₄ rich stream with no additional phase change (e.g., from gaseous phase to liquid phase) of the CH₄ during gas polishing (e.g., removal of CO₂ from the second CH₄ rich stream to be polished) and liquefaction of the CH₄ because the CH₄ may be directly obtained in liquid phase and because of the different solidification temperature between the CO₂ and the CH₄. Therefore, the plant may comprise fewer parts and allows to implement simpler systems while directly obtaining liquid CH₄ (which is polished).

In some examples, the third CH₄ rich stream comprising liquid CH₄, may be directly fed to a CH₄ unit to operate the CH₄ in liquid phase (e.g., the grid, or the CH₄ storage unit).

In some examples, a pressure to which the gas mixture is obtained, may be comprised between 30 barg and 50 barg, for example between 36 barg and 39 barg.

In some examples, the first predetermined temperature to which the cryogenic unit is configured to cool the gas mixture to be upgraded may be comprised between - 70°C and - 50°C, for example between - 60°C and - 50°C.

In some examples, the second predetermined temperature to which the cryogenic unit is configured to cool the gas mixture to be polished may be comprised between - 105°C and - 90°C, for example - 100°C.

In some examples, the third predetermined temperature to which the polishing unit is configured to further cool the cooled gas mixture to be polished may be comprised between - 160°C and - 145°C, for example - 150°C.

In some examples, feeding the cooled gas mixture to a CO₂ separation unit for separating at least part of the CO₂ in liquid phase from the cooled gas mixture may comprise: feeding the cooled gas mixture to a flash tank, the cooled gas mixture to the first predetermined temperature comprised between - 70°C and - 50°C and to a pressure comprised between 30 barg and 50 barg; recovering: a first flash tank stream from the flash tank through a CO₂ rich flash tank exit line, the first flash tank stream comprising a portion of liquid CO₂ and a portion of liquid CH₄, wherein the portion of liquid CO₂ is greater than the portion of liquid CH₄; and a second flash tank stream from the flash tank through a CH₄ rich flash tank exit line, the second flash tank stream comprising a portion of gaseous CH₄ and a portion of gaseous CO₂; wherein the portion of gaseous CH₄ is greater than the portion of gaseous CO₂; feeding the first flash tank stream to a distillation column fluidically connected to the flash tank through the CO₂ rich flash tank exit line.

Furthermore, in some of these examples, recovering a first CO₂ rich stream comprising liquid CO₂ from the CO₂ separation unit through the first CO₂ exit line may comprise: recovering the first CO₂ rich stream from the distillation column through the first CO₂ exit line, the first CO₂ rich stream comprising a final portion of liquid CO₂, wherein the final portion of the liquid CO₂ is greater than or equal to 99.9% mol of the first CO₂ rich stream.

Moreover, in some of these examples, recovering a first CH₄ rich stream comprising a portion of gaseous CH₄ and a portion of gaseous CO₂ from the CO₂ separation unit through a first CH₄ exit line may comprise: recovering the first CH₄ rich stream from the distillation column through the first CH₄ exit line, the first CH₄ rich stream comprising the portion of gaseous CH₄ and the portion of CO₂, wherein the portion of gaseous CH₄ is greater than the portion of gaseous CO₂.

In some examples, the recovered third CH₄ rich stream comprises a final portion of liquid CH₄, and a final portion of liquid CO₂ wherein the final portion of the liquid CO₂ is less than or equal to 50 ppm of CO₂.

In some examples, the method comprises reducing the pressure of the third CH₄ rich stream comprising liquid CH₄ to a pressure comprised between 1 barg and 5 barg, and
subcooling at least 3°C the liquid CH₄.

In some examples, the method further comprises heating the polishing unit and melting the CO₂ in solid phase so that the heated CO₂ is in liquid phase or gaseous phase. In some of these examples, the method further comprises exiting a third CO₂ rich stream comprising a portion of the CO₂ in liquid phase or gaseous phase and a portion of CH₄, through a CO₂ exit line. In these examples, the third CO₂ rich stream may comprise at least 99% mol CH₄ and up to 1% mol CH₄. In some of the examples, the third CO₂ rich stream may be supplied to the cryogenic unit or to the dehydration unit. Therefore, there may be a feedback line from the polishing unit to the cryogenic unit and / or the dehydration unit so that streams that are still CO₂ rich (i.e., streams comprising a preponderant portion of CO₂ such as the third CO₂ rich stream) may be fed to the cryogenic unit and / or the dehydration unit to start over the process of separation and liquefaction of CO₂, CH₄ gas upgrading, and CH₄ gas polishing. Consequently, a plant with no spilling or loss of the portion of CH₄ during gas polishing, or during separation and liquefaction of the CH₄, may be obtained. As a result, the carbon print of a plant may be improved over the carbon print of a plant with e.g., PSA systems.

In some examples, the method may comprise feeding the cooled first CO₂ rich stream comprising liquid CO₂ to a CO₂ storage unit through the first CO₂ exit line.

In some examples, the method may comprise feeding the third CH₄ rich stream comprising liquid CH₄ to a CH₄ storage unit through the third CH₄ exit line and storing the liquid CH₄

The term gas mixture may be understood as any gas comprising a portion of CO₂, and a portion of CH₄. For example, the gas mixture composition may vary accordingly if the gas mixture is a biogas, or biomethane, or natural gas.

The term gas upgrading may refer to any process which is capable of separating a gas mixture into its constituent gases (e.g., methane CH₄, carbon dioxide CO₂, water H₂O, and hydrogen sulfide H₂S). The gas mixture may be e.g., biogas or natural gas depending on its origin (i.e., respectively a renewable source or a fossil source).

The term gas polishing may refer to any process which is capable of removing CO₂ and / or impurities from a gas mixture which comprises at least 96% mol CH₄, and a portion of CO₂ (i.e., the second CH₄ rich stream).

The term barg may be understood as the unit for the measurement of the pressure given by absolute pressure minus atmospheric pressure.

The term "% mol" may be used to refer to a molar percentage of a number of moles of a first component (e.g., CH₄) present in a mixture relative to the total number of moles comprised in the mixture.

The term preponderant portion may be used to refer to a first gas portion which may be numerically greater than a second gas portion. For example, a gas mixture with a portion of CH₄ of 51% mol, and a portion of CO₂ of 49% mol. The portion of CH₄ is the preponderant portion of the gas mixture, compared to the portion of CO₂.

The term "subcooling" may be used to refer to a liquid at a temperature below the boiling point of the liquid for a given pressure.

### BRIEF DESCRIPTION OF THE DRAWINGS

Non-limiting examples of the present disclosure will be described in the following, with reference to the appended drawings in which:
Figure 1 is a simplified view of a plant to obtain liquid carbon dioxide and liquid methane from a gas mixture according to an example of the present disclosure;
Figure 2 schematically represents a plant to obtain liquid carbon dioxide and liquid methane from a gas mixture according to an example of the present disclosure;
Figure 3 schematically represents a plant to obtain liquid carbon dioxide and liquid methane from a gas mixture according to an example of the present disclosure;
Figure 4 schematically represents a plant to obtain liquid carbon dioxide and liquid methane from a gas mixture according to an example of the present disclosure;
Figure 5 schematically represents a plant to obtain liquid carbon dioxide and liquid methane from a gas mixture according to an example of the present disclosure;
Figure 6 schematically represents a plant to obtain liquid carbon dioxide and liquid methane from a gas mixture according to an example of the present disclosure; and
Figure 7 schematically shows a block diagram of a method of obtaining liquid carbon dioxide and liquid methane from a gas mixture according to an example of the present disclosure.

### DETAILED DESCRIPTION OF EXAMPLES

In these figures, the same reference signs have been used to designate matching elements.

Throughout the description, a gas mixture may comprise a portion of methane CH₄ (for example 55% mol - 65% mol of the gas mixture), and a portion of carbon dioxide CO₂ (for example 45% mol - 35% mol of the gas mixture). The aforementioned gas mixture may be e.g., biogas or natural gas depending on its origin (i.e., respectively a renewable source or a fossil source).

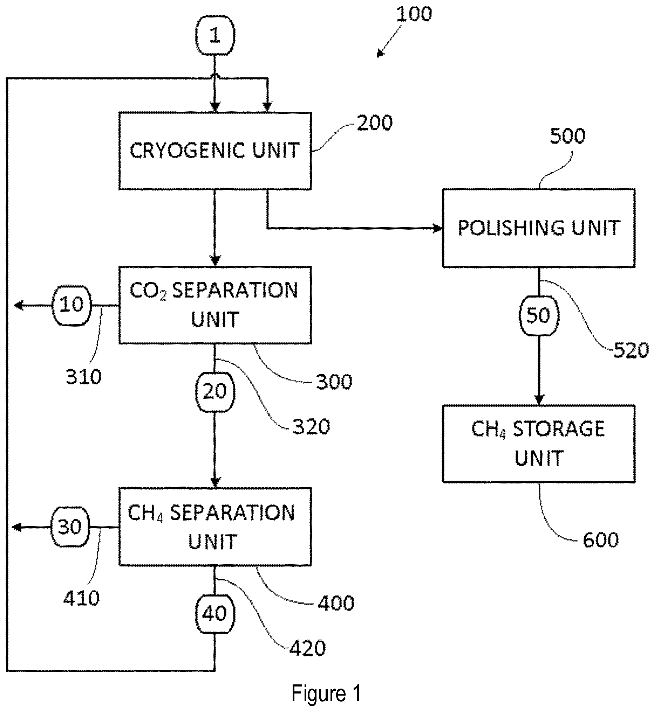

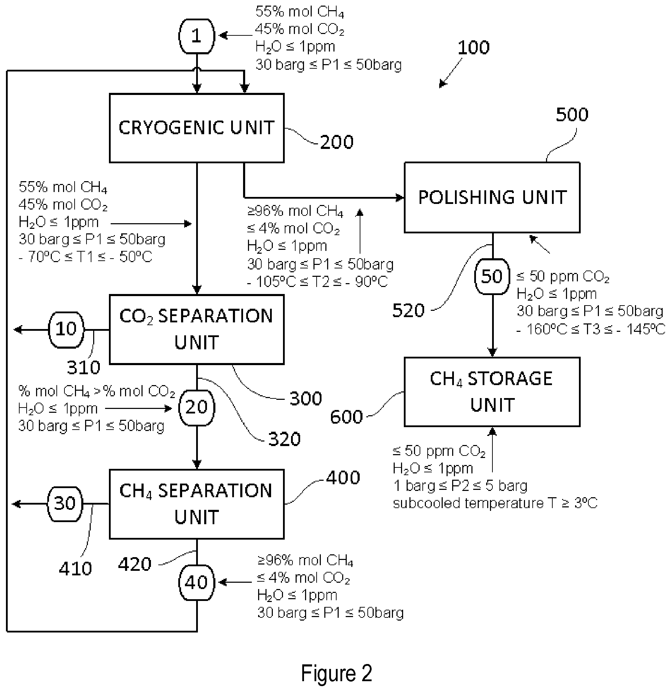

Features of figure 1 may be described in combination with the features of any of the examples shown in figures 2-6.

Figure 1 is a simplified view of one example of a plant 100 to obtain liquid methane by upgrading and subsequently polishing a gas mixture 1. The plant 100 comprises a cryogenic unit 200, a CO₂ separation unit 300, a CH₄ separation unit 400, a polishing unit 500, and a CH₄ storage unit 600.

The cryogenic unit 200 is configured to receive the gas mixture 1 to be upgraded; and cool the gas mixture 1 to a first predetermined temperature. The cryogenic unit 200 is based on a Rankine cycle which allows adjusting thermal requirements for cooling and / or heating a gas mixture 1 to be upgraded.

The cryogenic unit 200 may comprise a first inlet to receive the gas mixture 1 to be upgraded and a first outlet to exit the gas mixture to a first predetermined temperature to which the cryogenic unit 200 is configured to cool the gas mixture to be upgraded.

Cryogenic units are based on refrigeration cycles. The refrigerant of these refrigeration cycles may be part of the gas stream to be cooled (open cycle process) or a separate refrigerant continuously recirculated through a heat exchanger or a cold box (closed cycle process).

In the example of figure 1, the cryogenic unit 200 is based on a closed Rankine cycle. The closed Rankine cycle may use a mixed refrigerant (e.g., a mixture of compounds such as hydrocarbons). The composition of the mixed refrigerant may be selected to match the boiling curve of each compound forming the mixed refrigerant with a cooling curve of the gas mixture 1 to be upgraded or with a cooling curve of any received gas stream. Therefore, the mixed refrigerant may provide a cooling duty across a range of temperatures comprised between - 160°C and 25°C. Particularly, the refrigerant mixture may comprise compounds which are at least partially in liquid phase across the temperature range mentioned above. As a result, the refrigerant mixture may provide latent heat to cool the gas mixture 1 to be upgraded or the received stream.

In some examples, the cryogenic unit 200 may cool the gas mixture 1 to be upgraded by the action of a counter current flow refrigerant cycle (i.e., the mixed refrigerant flows in an opposite direction to the flow of gas being cooled) during operation of the cryogenic unit 200).

It may be noted that depending on the temperature of the gas mixture 1 to be upgraded or the temperature of the received stream, the cryogenic unit 200 may cool the gas mixture 1 to be upgraded or the received stream across the temperature range mentioned above. Similarly, the cryogenic unit 200 may heat the gas mixture 1 to be upgraded or the received stream across the temperature range mentioned above.

In some examples, the first predetermined temperature to which the gas mixture 1 to be upgraded is cooled by the cryogenic unit may be comprised between - 70°C and - 50°C, for example between - 60°C and - 50°C. Therefore, a gas mixture 1 to be upgraded may be cooled from ambient temperature to the first predetermined temperature comprised between - 70°C and - 50°C.

In some of these examples, the gas mixture 1 to be upgraded, which is received by the cryogenic unit 200, may be at a pressure comprised between 30 barg and 50 barg, for example between 36 barg and 39 barg. At these operating temperatures (e.g., - 60°C < t < - 50°C) and at these operating pressures (e.g., 36 barg < p < 39 barg), the energy cost of the separation of CO₂ from the gas mixture 1 to be upgraded may be decreased.

Referring to the CO₂ separation unit 300, the CO₂ separation unit 300 is in fluid communication with the first outlet of the cryogenic unit 200. Furthermore, the CO₂ separation unit comprises a first CO₂ exit line 310 and a first CH₄ exit line 320. The CO₂ separation unit 300 is configured to separate at least part of the CO₂ in liquid phase from the cooled gas mixture. The CO₂ separation unit 300 is configured to output a first CO₂ rich stream 10 and a first CH₄ rich stream 20. The first CO₂ rich stream 10 may comprise liquid CO₂. In figure 1, the first CO₂ rich stream 10 exits the CO₂ separation unit 300 through the first CO₂ exit line 310.

Similarly, the first CH₄ rich stream 20 may comprise a mixture including a portion of gaseous CH₄ and a portion of gaseous CO₂. The portion of gaseous CH₄ within the first CH₄ rich stream 20 may be greater than the portion of gaseous CO₂ within the first CH₄ rich stream 20. In figure 1, the first CH₄ rich stream 20 exits the CO₂ separation unit 300 through the first CH₄ exit line 320.

In some examples, the cryogenic unit 200 may be further configured to: receive the gas mixture 1 to be upgraded with a pressure comprised between 30 barg and 50 barg; and cool the gas mixture 1 to the first predetermined temperature comprised between - 70°C and - 50°C. In these examples, the CO₂ separation unit 300 may be coupled to the cryogenic unit 200, and the CO₂ separation unit 300 may be configured to at least partially separate CO₂ from the gas mixture 1 to be upgraded, and to output: the first CO₂ rich stream 10 comprising liquid CO₂ through the first CO₂ exit line 310; and the first CH₄ rich stream 20 comprising a portion of gaseous CH₄ and a portion of gaseous CO₂ through the first CH₄ exit line 320.

Furthermore, the above-mentioned operating pressures and the above-mentioned operating temperatures to which the gas mixture 1 to be upgraded may be received by the CO₂ separation unit 300, may be selected to achieve selective separation of CO₂ from the gas mixture 1 to be upgraded (comprising at least a portion of CH₄) because of different liquefaction temperatures between the portion of CO₂ and the portion of CH₄ for the operating pressure and / or operating temperatures of the CO₂ separation unit 300. At these operating pressures and at these operating temperatures, the portion of CH₄ may be mainly in gaseous phase whereas the portion of CO₂ may be mainly in liquid phase.

Consequently, separation of CO₂ from the gas mixture 1 comprising CH₄ may be achieved because the CO₂ and the CH₄ are in different phases at these operating pressures and at these operating temperatures (respectively, the portion of CO₂ may be in liquid phase, and the portion of CH₄ may be in gaseous phase). Therefore, gas upgrading and retrieval of the liquid CO₂ may be achieved in a single unit (i.e., the CO₂ separation unit).

Referring to the CH₄ separation unit 400, the CH₄ separation unit 400 is in fluid communication with the CO₂ separation unit 300 through the first CH₄ exit line 320. Therefore, the first CH₄ rich stream 20 may be fed to the CH₄ separation unit 400 through the first CH₄ exit line 320. The CH₄ separation unit 400 comprises a second CO₂ exit line 410 and a second CH₄ exit line 420. The CH₄ separation unit 400 may be configured to separate at least part of the CO₂ from the first CH₄ rich stream 20.

Consequently, the CH₄ separation unit 400 exits a second CO₂ rich stream 30 through the second CO₂ exit line 410, and a second CH₄ rich stream 40 through the second CH₄ exit line 420.

The second CO₂ rich stream 30 may comprise a preponderant portion of gaseous CO₂. A preponderant portion of gaseous CO₂ may refer to a portion of gaseous CO₂ which is greater than the remaining portion of CH₄ and / or the remaining portion of impurities (e.g., H₂S, H₂O).

The second CH₄ rich stream 40 may comprise a final portion of the gaseous CH₄, and the final portion of the gaseous CH₄ is greater than or equal to 96% mol of the second CH₄ rich stream 40.

It may be noted that the passage of the gas mixture 1 through the cryogenic unit 200, subsequently through the CO₂ separation unit 300, and subsequently through the CH₄ separation unit 400 may result in the second CH₄ rich stream 40 which is an upgraded gas.

To liquefy the CH₄ of the second CH₄ rich stream 40, CO₂ may be at least partially further removed from the second CH₄ rich stream 40. Removal of the portion of CO₂ from the second CH₄ rich stream 40 (which is an upgraded gas) raises the second CH₄ rich stream's 40 CH₄ content, resulting in a gas that is polished. Furthermore, CO₂ must be removed to less than 50 ppm from the second CH₄ rich stream 40 to allow the liquefaction of the polished gas comprising less than 50 ppm of CO₂.

Consequently, the second CH₄ rich stream 40 is an upgraded gas to be polished.

In the example of figure 1, the second CH₄ exit line 420 is in fluid communication with a second inlet of the cryogenic unit whereby the second inlet receives the second CH₄ rich stream 40 to be polished. Furthermore, a second outlet of the cryogenic unit 200 exits the second CH₄ rich stream 40 to a second predetermined temperature to which the cryogenic unit 200 is configured to cool the second CH₄ rich stream to be polished.

In some examples, the second predetermined temperature to which the second CH₄ rich stream 40 to be polished is cooled by the cryogenic unit 200, may be comprised between - 105°C and - 90°C, for example - 100°C. Therefore, the second CH₄ rich stream 40 to be polished may be cooled from a temperature to which the second CH₄ rich stream 40 is exited from the CH₄ separation unit 400 to the second predetermined temperature comprised between - 105°C and - 90°C. As a result, the cryogenic unit 200 cools the second CH₄ rich stream 40 to the second predetermined temperature whereby the cooled second CH₄ rich stream 40 may comprise a portion of CH₄ in liquid phase and a portion of CO₂. The portion of CO₂ may be in liquid phase or in gaseous phase.

In some of these examples, the second CH₄ rich stream 40 to be polished, which is received by the cryogenic unit 200, may be at a pressure comprised between 30 barg and 50 barg, for example between 36 barg and 39 barg. At these operating temperatures (e.g., - 105°C < t < - 90°C) and at these operating pressures (e.g., 36 barg < p < 39 barg), the energy cost of liquefaction of CH₄, and the energy cost of separation of CO₂ from liquid CH₄ comprised within the cooled second CH₄ rich stream 40, may be decreased.

Referring to the polishing unit 500, the polishing unit 500 comprises a heat exchanger with an inlet and an outlet. The inlet of the heat exchanger is in fluid communication with the second outlet of the cryogenic unit 200. Furthermore, the heat exchanger is configured: to further cool the cooled second CH₄ rich stream 40 to a third predetermined temperature comprised between - 160°C and - 145°C. Therefore, at the third predetermined temperature, the polishing unit 500 may separate at least part of the CO₂ in solid phase from the cooled second CH₄ rich stream 40. Consequently, it is possible to obtain a third CH₄ rich stream 50 which may comprise a final portion of liquid CH₄, and a final portion of CO₂ wherein the final portion of the CO₂ is less than or equal to 50 ppm of CO₂ (as will be later explain on). As a result, a liquid gas mixture (which is polished) may be obtained. In figure 1, the third CH₄ rich stream 50 exits the polishing unit 500 through a third CH₄ exit line 520.

Similarly, in some examples, the polishing unit 500 may exit a third CO₂ rich stream comprising a portion of the CO₂ in liquid phase or gaseous phase and a portion of CH₄ through a third CO₂ exit line.

Referring to the operating pressures and at these operating temperatures of the polishing unit 500 (commented above), the portion of CH₄ may be mainly in liquid phase whereas the portion of CO₂ may be mainly in solid phase. Therefore, there may be an overlap between liquefaction of CH₄ and separation of CO₂ from the cooled second CH₄ rich stream 40 within the polishing unit 500. The heat exchanger may retain the portion of CO₂ in solid phase (which solidifies through and / or within the heat exchanger), and a stream comprising substantially liquid CH₄ with less than 50 ppm of CO₂ may be obtained at the outlet of the polishing unit 500. Consequently, gas polishing and retrieval of the portion of CO₂ may be achieved in a single unit (i.e., the polishing unit 500).

As a result, storage or transport of the liquid CH₄ within the third CH₄ rich stream 50 may be achieved with a reduced energy cost. In addition, the plant 100 may have a reduced plant footprint (i.e., the space needed for implementing the space is reduced).

Referring to the CH₄ storage unit 600, the CH₄ storage unit 600 comprises an inlet and an outlet. The inlet of the CH₄ storage unit 600 is in fluid communication with the polishing unit 500, through the third CH₄ exit line 520. Due to the CH₄ storage unit 600 being in fluid communication with the outlet of the polishing unit 500, the CH₄ storage unit 600 receives the third CH₄ rich stream 50 comprising liquid CH₄ and stores the liquid CH₄. This configuration of the plant 100 may allow to efficiently obtain and store liquid CH₄ (i.e., liquid gas mixture which is upgraded and polished).

In some examples, the CH₄ storage unit 600 may comprise a pressure-reducing device in fluid communication with the outlet of the heat exchanger through the third CH₄ exit line 520, and a tank in fluid communication with the pressure-reducing device. The pressure-reducing device may be configured to expand the third CH₄ rich stream 50 to a pressure comprised between 1 barg and 5 barg. In these examples, the pressure-reducing device may be e.g., a Joule Thomson valve.

In some examples, when the third CH₄ rich stream 50 may be expanded to the pressure comprised between 1 barg and 5 barg, the liquid CH₄ may be subcooled to at least 3 °C (e.g., more than 3 °C subcooled). Therefore, the third CH₄ rich stream 50 that is polished (i.e., the liquid CH₄ with up to 50 ppm of CO₂) may readily be transported for its use.

Furthermore, in some examples, the plant 100 may comprise a desulphurization unit coupled to the cryogenic unit 200. The desulphurization unit may be configured to receive the gas mixture 1 to be upgraded with a pressure comprised between 0.2 barg and 15 barg, for example between 10 barg and 15 barg; and remove H₂S from the gas mixture 1 to be upgraded so that the gas mixture 1 to be upgraded may comprise 4 ppm of H₂S or less than 4 ppm of H₂S. Therefore, the gas mixture 1 to be upgraded may be at least partially desulphurized by the action of the desulphurization unit. As a result, the received gas mixture to be upgraded by the cryogenic unit 200 may comprise up to 4 ppm of H₂S.

In some of these examples, the desulphurization unit may comprise a NaOH scrubbing column and an active carbon filter. The NaOH scrubbing column may be configured to reduce an H₂S content of the gas mixture 1 to a resulting H₂S content which is less than or equal to 100 ppm of H₂S. The active carbon filter may be coupled to the NaOH scrubbing column and the active carbon filter may be configured to reduce the resulting H₂S content of the gas mixture to a final H₂S content which is less than or equal to 4 ppm of H₂S. Therefore, a gas mixture 1 that is a mixture of gases with an initial content of H₂S may comprise a final H₂S content of up to 4 ppm of H₂S by the action of the NaOH scrubbing column and the active carbon filter.

In these examples, the desulphurization unit may comprise an inlet and an outlet. The inlet of the desulphurization unit may be configured to receive the gas mixture 1 to be upgraded; and the outlet of the desulphurization unit may be fluidically connected to the first inlet of the cryogenic unit 200 and the gas mixture to be upgraded comprising 4 ppm of H₂S or less than 4 ppm of H₂S may be fed to the cryogenic unit. As a result, the received gas mixture to be upgraded by the cryogenic unit may comprise up to 4 ppm of H₂S.

In some examples, the plant 100 may comprise a dehydration unit coupled to the cryogenic unit 200. The dehydration unit may be configured to receive the gas mixture 1 to be upgraded with a pressure comprised between 0.2 barg and 15 barg, for example between 10 barg and 15 barg; and remove moisture from the gas mixture 1 to be upgraded so that the gas mixture 1 to be upgraded may comprise 1 ppm of H₂O or less than 1 ppm of H₂O. Therefore, the gas mixture 1 to be upgraded may be at least partially dehydrated by the action of the dehydration unit. As a result, the received gas mixture 1 to be upgraded by the cryogenic unit may comprise up to 1 ppm of H₂O.

In some of these examples, the dehydration unit may comprise one or more adsorbers configured to reduce an H₂O content of the gas mixture 1 to be upgraded to a final H₂O content which is less than or equal to 1 ppm of H₂O. The one or more adsorbers are configured to remove moisture from the gas mixture 1 to be upgraded. In some of these examples, the one or more adsorbers may be selected to achieve that the gas mixture 1 to be upgraded may comprise 1 ppm of H₂O or less than 1 ppm of H₂O. As a result, the received gas mixture 1 to be upgraded by the cryogenic unit 200 may comprise up to 1 ppm of H₂O.

In these examples, the dehydration unit may comprise an inlet and an outlet. The inlet of the dehydration unit may be configured to receive the gas mixture 1 to be upgraded; and the outlet of the dehydration unit may be fluidically connected to the first inlet of the cryogenic unit so that the gas mixture 1 to be upgraded comprising 1 ppm of H₂O or less than 1 ppm of H₂O may be fed to the first inlet of the cryogenic unit 200.

It may be noted that the cryogenic unit 200 may receive the gas mixture 1 to be upgraded or depending on the composition of the received gas mixture 1 to be upgraded, the plant 100 may comprise a desulphurization unit and / or a dehydration unit for removing H₂S or H₂O from the gas mixture 1 to be upgraded. In the latter case (i.e., when the plant 100 may comprise a desulphurization unit and / or a dehydration unit), the received gas mixture 1 to be upgraded may be at least partially desulphurized and / or at least partially dehydrated by respectively the action of the desulphurization unit and / or the dehydration unit before being supplied to the cryogenic unit 200.

Therefore, in some examples, the plant 100 may comprise a cleaning unit coupled to the cryogenic unit 200. The cleaning unit may comprise the above-mentioned desulphurization unit and the above-mentioned dehydration unit. Therefore, the gas mixture 1 to be upgraded may be at least partially desulphurized and at least partially dehydrated by respectively the action of the desulphurization unit and the dehydration unit. As a result, the received gas mixture 1 to be upgraded by the cryogenic unit may comprise up to 4 ppm of H₂S and up to 1 ppm of H₂O. In these examples, the desulphurization unit and / or the dehydration unit may comprise the respective features of any example of desulphurization unit and / or the features of any example of the dehydration unit herein disclosed.

In some of these examples, the cleaning unit may comprise an inlet and an outlet. The inlet of the cleaning unit may be configured to receive the gas mixture 1 to be upgraded; and the outlet of the cleaning unit may be fluidically connected to the first inlet of the cryogenic unit 200. Therefore, the gas mixture 1 to be upgraded may comprise 4 ppm of H₂S or less than 4 ppm of H₂S, and 1 ppm of H₂O or less than 1 ppm of H₂O. As a result, a gas mixture 1 with up to 4 ppm of H₂S and up to 1 ppm of H₂O may be fed to the cryogenic unit 200.

Similarly, it may be noted that the cryogenic unit 200 may receive a gas mixture 1 to be upgraded at a pressure. Depending on the pressure of the received gas mixture 1 to be upgraded, the plant 100 may comprise one or more compression units to increase the pressure of the received gas mixture 1 to be upgraded before the received gas mixture 1 to be upgraded may be supplied to the cryogenic unit.

In some examples, the plant 100 may comprise a first compression unit coupled to the cryogenic unit 200. The first compression unit may be configured to compress the gas mixture 1 to be upgraded at a first compression pressure. The first compression pressure may be comprised between 0.2 barg and 15 barg, for example between 10 barg and 15 barg. In these examples, the gas mixture 1 to be upgraded may be compressed by the first compression unit before the gas mixture 1 to be upgraded may be supplied to the desulphurization unit and / or to the dehydration unit.

In some of these examples, the plant 100 may comprise a second compression unit coupled to the cryogenic unit. The second compression unit may be configured to compress the gas mixture to be upgraded at a second compression pressure. Particularly, the second compression pressure may be greater than the first compression pressure and the second compression pressure may be comprised between 30 barg and 50 barg, for example between 36 barg and 39 barg, and more for example at 36 barg.

It may be noted that the cryogenic unit is configured to receive the gas mixture to be upgraded where the gas mixture to be upgraded may be at a pressure comprised between 30 barg and 50 barg, for example between 36 barg and 39 barg.

By compressing the gas mixture 1 to be upgraded, separation of CO₂ from the gas mixture 1 to be upgraded may be facilitated. Therefore, the overall electric work required by the cryogenic unit 200 to cool the gas mixture 1 to be upgraded may be reduced. As a result, compressing the gas mixture 1 to be upgraded before the gas mixture 1 is fed to the cryogenic unit 200 and / or to the CO₂ separation unit, may reduce the overall electric work required to separate CO₂ from the gas mixture 1, or to obtain liquid CH₄ with up to 50 ppm of CO₂ from the gas mixture 1.

Figure 2 schematically represents a plant 100 to liquid carbon dioxide and liquid methane from a gas mixture 1. Features of figure 2 may be described in combination with the features of any of the examples shown in figure 1.

In figure 2, the gas mixture 1 to be upgraded may comprise 55 % mol CH₄, 45 % mol CO₂, and the H₂O content within the gas mixture 1 is equal to or less than 1 ppm. In the example of figure 2, the gas mixture 1 to be upgraded may be at a pressure P1 comprised between 30 barg and 50 barg, for example between 36 barg and 39 barg. Therefore, the gas mixture 1 to be upgraded may be supplied to the cryogenic unit 200 at the pressure comprised e.g., between 30 barg and 50 barg.

By the passage of the gas mixture 1 to be upgraded within the cryogenic unit 200, the gas mixture 1 to be upgraded may be cooled to the first predetermined temperature T1 comprised between - 70°C and - 50°C, for example between - 60°C and - 50°C.

Therefore, the temperature to which the gas mixture 1 to be upgraded is exited from the cryogenic unit 200, may be comprised between - 70°C and - 50°C. Furthermore, the cooled gas mixture 1 to be upgraded may comprise the same above-mentioned composition (i.e., 55 % mol CH₄, 45 % mol CO₂, and an H₂O content of the gas mixture 1 that is equal to or less than 1 ppm).

In figure 2, the cooled gas mixture 1 to be upgraded is supplied to the CO₂ separation unit 300 to separate at least part of the CO₂ in liquid phase from the cooled gas mixture 1 to be upgraded. In this example of figure 2, the received cooled gas mixture 1 to be upgraded by the CO₂ separation unit 300 may comprise e.g., a temperature between - 60°C and - 50°C, and a pressure comprised between 36 barg and 39 barg.

Therefore, in an example, the CO₂ separation unit 300 may comprise an operating temperature between - 60°C and - 50°C, and an operating pressure comprised between 36 barg and 39 barg. At these operating pressures and at these operating temperatures, the portion of CH₄ of the gas mixture 1 to be upgraded may be mainly in gaseous phase whereas the portion of CO₂ may be mainly in liquid phase. Consequently, separation of CO₂ from the gas mixture comprising CH₄ may be achieved because the CO₂ and the CH₄ are in different phases at these operating pressures and at these operating temperatures (respectively, the portion of CO₂ may be in liquid phase, and the portion of CH₄ may be in gaseous phase). Therefore, separation of CO₂ from the gas mixture 1 to be upgraded and retrieval of liquefied CO₂ may be achieved in a single unit (i.e., the CO₂ separation unit).

The CO₂ separation unit 300 provides the first CO₂ rich stream 10 which is exited from the CO₂ separation unit 300 through the first CO₂ exit line 310. By the passage of the gas mixture 1 to be upgraded within the CO₂ separation unit 300, the first CO₂ rich stream 10 may comprise at least 99.9% mol of liquid CO₂. Particularly, the portion of liquid CO₂ is greater than or equal to 99.9% mol of the first CO₂ rich stream 10.

In some examples, the first CO₂ rich stream 10 (which may comprise liquid CO₂) exiting the CO₂ separation unit 300 through the first CO₂ exit line 310 may be at a temperature comprised between 2°C and 5°C, for example at 3°C.

In some of these examples, the first CO₂ exit line 310 may be in fluid communication with a third inlet of the cryogenic unit 200. The third inlet of the cryogenic unit 200 may receive the first CO₂ rich stream 10. The cryogenic unit 200 may comprise a third outlet which may exit the first CO₂ rich stream 10 to a fourth predetermined temperature to which the cryogenic unit 200 is configured to cool the first CO₂ rich stream 10.

Consequently, the first CO₂ rich stream 10 (which may comprise liquid CO₂) exiting the CO₂ separation unit 300 through the first CO₂ exit line 310 may be further cooled to a fourth predetermined temperature comprised between - 40°C and - 25°C, for example at - 30 °C by the cryogenic unit 200.

In some of these examples, the plant comprises a CO₂ storage unit in fluid communication with the third outlet of the cryogenic unit 200. The CO₂ storage unit may be configured to receive the cooled first CO₂ rich stream comprising liquid CO₂ and store the liquid CO₂. Therefore, the first CO₂ rich stream 10 may be further cooled to the fourth predetermined temperature by the cryogenic unit 200 that cooled the gas mixture to be upgraded prior to being fed to the CO₂ storage unit.

In some examples, the CO₂ storage unit may comprise a pressure-reducing device (e.g., a Joule Thomson valve) configured to expand the liquid CO₂ being fed to the CO₂ storage unit at a pressure comprised between 10 barg and 25 barg.

Furthermore, the CO₂ separation unit 300 provides the first CH₄ rich stream 20 which is exited from the CO₂ separation unit 300 through the first CH₄ exit line 320. The first CH₄ rich stream 20 may comprise a preponderant portion of gaseous CH₄ and a portion of gaseous CO₂. The first CH₄ rich stream 20 is further supplied to the CH₄ separation unit (e.g., a membrane upgrading unit, or a cryo-upgrading unit) to increase further the CH₄ content of the first CH₄ rich stream 20.

The CO₂ separation unit 300 provides the first CH₄ rich stream 20 which is exited from the CO₂ separation unit 300 through the first CH₄ exit line 320, to the CH₄ separation unit 400. Consequently, further removal of CO₂ from the first CH₄ rich stream 20 may be achieved.

In some examples, the CH₄ separation unit 400 may comprise a membrane upgrading unit to be fed with the first CH₄ rich stream 20 through the first CH₄ exit line 320. In these examples, the first CH₄ rich stream 20 may be heated by the cryogenic unit 200 that cooled the gas mixture 1 to be upgraded prior to being fed to the membrane upgrading unit. The membrane upgrading unit may be configured to receive the first CH₄ rich stream 20 through the first CH₄ exit line 320 at a temperature comprised between 10°C and 25°C; and a pressure comprised between 30 barg and 50 barg. Furthermore, the membrane upgrading unit may be configured to separate at least part of the CO₂ from the first CH₄ rich stream 20; and exit the second CO₂ rich stream 30 through the second CO₂ exit line 410; and the second CH₄ rich stream 40 through the second CH₄ exit line 420.

In some examples, where the plant 100 comprises a dehydration unit (as commented in the description referring to figure 1), the dehydration unit may be fluidically connected to the membrane upgrading unit through the second CO₂ exit line 410. In these examples, the dehydration unit may be at least partially fed with the second CO₂ rich stream 30 through the second CO₂ exit line 410. Therefore, there may be a feedback line (i.e., the second CO₂ exit line 410) from the membrane upgrading unit to the dehydration unit so that the second CO₂ rich stream 30 that may be CO₂ rich (i.e., comprising a preponderant portion of CO₂, and a portion of CH₄) may be fed to the dehydration unit to start over the process of separation of CO₂ from a gas mixture 1 to be upgraded. Consequently, a plant 100 avoiding spillage of CH₄, may be obtained.

In some examples, the CH₄ separation unit 400 may comprise a cryo-upgrading unit. The cryo-upgrading unit may comprise a heat exchanger with an inlet and an outlet. The inlet of the heat exchanger may be in fluid communication with the CO₂ separation unit 300 through the first CH₄ exit line 320. In some of these examples, the heat exchanger may be configured to receive the first CH₄ rich stream 20 through the first CH₄ exit line 320. Furthermore, the heat exchanger may be configured to cool the first CH₄ rich stream 20 to a fifth predetermined temperature comprised between - 100°C and - 50°C, and separate at least part of the CO₂ in solid phase from the first CH₄ rich stream 20; and exit the second CO₂ rich stream 30 through the second CO₂ exit line 410, and exit the second CH₄ rich stream 40 through the second CH₄ exit line 420.

In summary, the CH₄ separation unit 400 exits the second CO₂ rich stream 30 through the second CO₂ exit line 410; and the second CH₄ rich stream 40 through the second CH₄ exit line 420.

The second CH₄ rich stream 40 may comprise at least 96% mol CH₄ (e.g., 96% mol - 99.5% mol CH₄), less than 4% mol CO₂ (e.g., 4% mol - 0.5% mol CO₂), and the H₂O content within the second CH₄ rich stream 40 may be up to 1 ppm.

Because CO₂ has to be removed to less than 50 ppm from the second CH₄ rich stream 40 to allow the liquefaction of the polished gas comprising less than 50 ppm of CO₂, the second CH₄ rich stream 40 is an upgraded gas to be polished.

In the example of figure 2, the second CH₄ rich stream 40 to be polished may be at the pressure P1 comprised between 30 barg and 50 barg, for example between 36 barg and 39 barg. Therefore, the second CH₄ rich stream 40 to be polished may be supplied to the cryogenic unit 200 at the pressure comprised e.g., between 30 barg and 50 barg.

By the passage of the second CH₄ rich stream 40 to be polished within the cryogenic unit 200, the second CH₄ rich stream 40 to be polished may be cooled to the second predetermined temperature T2 comprised between - 105°C and - 90°C, for example - 100°C.

Therefore, the temperature to which the second CH₄ rich stream 40 to be polished is exited from the cryogenic unit 200, may be comprised between - 105°C and - 90°C. Furthermore, the cooled second CH₄ rich stream 40 to be polished may comprise the same above-mentioned composition (i.e., 96% mol - 99.5% mol CH₄, 4% mol - 0.5% mol CO₂, and the H₂O content of the second CH₄ rich stream 40 that is equal to or less than 1 ppm).

In figure 2, the cooled second CH₄ rich stream 40 to be polished is supplied to the polishing unit 500 to separate at least part of the CO₂ in solid phase from the cooled second CH₄ rich stream 40. In this example of figure 2, the cooled second CH₄ rich stream 40 to be polished, received by the polishing unit 500 may comprise a temperature between - 105°C and - 90°C, and a pressure comprised between 36 barg and 39 barg.

The polishing unit 500 further cools the second CH₄ rich stream 40, which is cooled by the cryogenic unit 200, to the third predetermined temperature with the heat exchanger. The heat exchanger may be configured: to cool the cooled second CH₄ rich stream 40 to the third predetermined temperature comprised between - 160°C and - 145°C. The cooled second CH₄ rich stream 40 that is further cooled by the operation of the polishing unit 500, comprises the portion of CH₄ in liquid phase and the portion of CO₂ in solid phase.

Therefore, in this example, the polishing unit 500 may comprise an operating temperature between - 160°C and - 145°C, and an operating pressure comprised between 36 barg and 39 barg. At these operating pressures and at these operating temperatures, the portion of CH₄ of the second CH₄ rich stream 40 to be polished may be mainly in liquid phase whereas the portion of CO₂ may be mainly in solid phase. As a result, gas polishing and retrieval of liquid CH₄ may be achieved in a single unit (i.e., the polishing unit).

The polishing unit 500 provides the third CH₄ rich stream 50 which is exited from the polishing unit 500 through the third CH₄ exit line 520. By the passage of the second CH₄ rich stream 40 to be polished within the polishing unit 500, the third CH₄ rich stream 50 may comprise a final portion of liquid CH₄, and a final portion of liquid CO₂ wherein the final portion of the liquid CO₂ is less than or equal to 50 ppm of CO₂.

Furthermore, in some examples, the polishing unit 500 may exit a third CO₂ rich stream comprising a portion of the CO₂ in liquid phase or gaseous phase and a portion of CH₄, through a third CO₂ exit line. The third CO₂ rich stream may be further supplied to any system requiring a CO₂ rich stream with at least 99% mol CH₄ and up to 1% mol CH₄. In some of these examples, the system to which the third CO₂ rich stream is supplied, may be the dehydration unit or the cryogenic unit 200.

Therefore, there may be a feedback line (i.e., the third CO₂ rich exit line) from the polishing unit 500 to the dehydration unit so that the third CO₂ rich stream that may be CO₂ rich (i.e., comprising a preponderant portion of CO₂, and a portion of CH₄) may be fed to the dehydration unit and / or the cryogenic unit 200 to start over the process of separation of CO₂ from a gas mixture 1 to be upgraded.

Referring to the CH₄ storage unit 600, the CH₄ storage unit 600 may comprise a pressure-reducing device in fluid communication with the polishing unit 500 through the third CH₄ exit line 520, and a tank in fluid communication with the pressure-reducing device. The pressure-reducing device may be configured to expand the third CH₄ rich stream 50 being fed to the CH₄ storage unit 600 at a pressure P2 comprised between 1 barg and 5 barg, or for example 3 barg. In these examples, the pressure-reducing device may be e.g., a Joule Thomson valve.

In some of these examples, when the third CH₄ rich stream 50 is expanded to the pressure comprised between 1 barg and 5 barg, or for example 3 barg, the liquid CH₄ may be subcooled by more than 3 °C with respect to the equilibrium temperature for the pressure of the CH₄ storage unit 600.

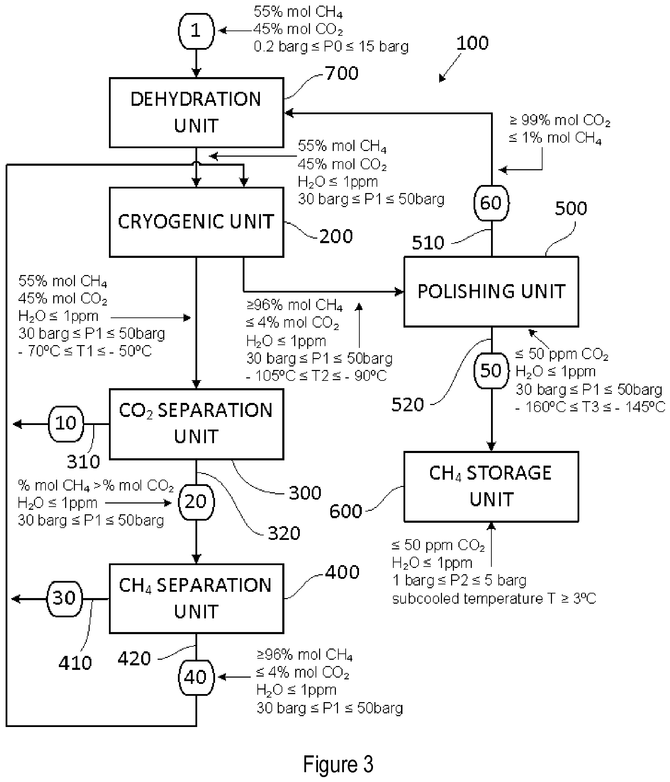

Figure 3 schematically represents a plant 100 to obtain liquid carbon dioxide and liquid methane from a gas mixture 1. Features of figure 3 may be described in combination with the features of any of the examples shown in figures 1 or 2.

Compared to figure 2, the plant 100 represented in figure 3 further comprises a dehydration unit 700. The dehydration unit 700 may comprise the features of any example of the dehydration unit herein disclosed (e.g., referring to the description and examples related to figure 1 or 2).

In the example of figure 3, the polishing unit 500 exits the third CO₂ rich stream 60 comprising a portion of the CO₂ in liquid phase or gaseous phase and a portion of CH₄, through the third CO₂ exit line 510. The third CO₂ rich stream 60 is supplied to the dehydration unit 700 through the third CO₂ exit line 510.

Therefore, in the example of figure 3, there is a feedback line (i.e., the third CO₂ exit line 510) from the polishing unit 500 to the dehydration unit 700 so that the third CO₂ rich stream 60 that may be CO₂ rich (i.e., comprising a preponderant portion of CO₂, and a portion of CH₄) is fed to the dehydration unit 700 to start over the process of separation of CO₂ from a gas mixture 1 to be upgraded.

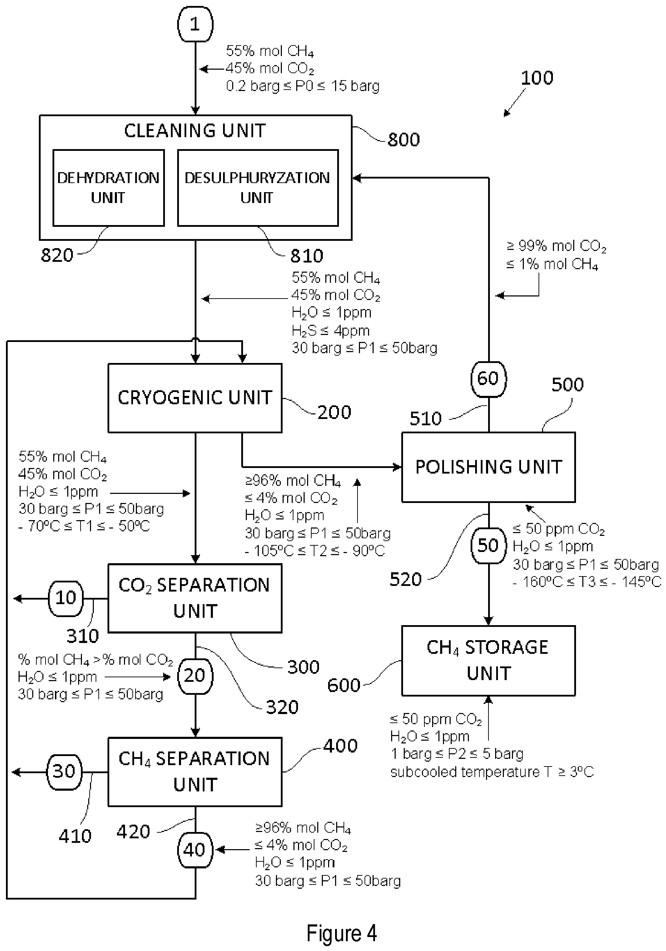

Figure 4 schematically represents a plant 100 to obtain liquid carbon dioxide and liquid methane from a gas mixture 1. Features of figure 4 may be described in combination with the features of any of the examples shown in figures 1 to 3.

Compared to figure 2 or 3, the plant 100 represented in figure 4 further comprises a cleaning unit 800. The cleaning unit 800 comprises a desulphurization unit 810 and a dehydration unit 820. The desulphurization unit 810 and the dehydration unit 820 may comprise the features of any example of desulphurization unit and / or the features of any example of the dehydration unit herein disclosed (e.g., referring to the description and examples related to figure 1 to 3).

The desulphurization unit 810 may be configured to receive the gas mixture 1 to be upgraded with a pressure comprised between 0.2 barg and 15 barg, for example between 10 barg and 15 barg; and remove H₂S from the gas mixture 1 to be upgraded so that the gas mixture 1 to be upgraded may comprise 4 ppm of H₂S or less than 4 ppm of H₂S.

The dehydration unit 820 may be configured to receive the gas mixture 1 to be upgraded with a pressure comprised between 0.2 barg and 15 barg, for example between 10 barg and 15 barg; and remove moisture from the gas mixture 1 to be upgraded so that the gas mixture 1 to be upgraded may comprise 1 ppm of H₂O or less than 1 ppm of H₂O.

Therefore, the gas mixture 1 to be upgraded, which exits the cleaning unit 800, may comprise 4 ppm of H₂S or less than 4 ppm of H₂S, and 1 ppm of H₂O or less than 1 ppm of H₂O.

It may be noted that according to the examples disclosed herein, the desulphurization unit 810 may comprise a NaOH scrubbing column and an active carbon filter as aforementioned in examples referring to figure 1.

Similarly, the dehydration unit 820 may comprise one or more adsorbers as aforementioned in examples referring to figure 1.

In figure 4, the cleaning unit 800 is coupled to the cryogenic unit 200. The cleaning unit 800 may comprise an inlet and an outlet, the inlet of the cleaning unit 800 may be configured to receive the gas mixture 1 to be upgraded; and the outlet of the cleaning unit may be fluidically connected to the first inlet of the cryogenic unit 200.

Analogously to figure 3, in the example of figure 4, the polishing unit 500 exits the third CO₂ rich stream 60 comprising a portion of the CO₂ in liquid phase or gaseous phase and a portion of CH₄, through the third CO₂ exit line 510. The third CO₂ rich stream 60 is supplied to the cleaning unit 800 through the third CO₂ exit line 510.

Therefore, in the example of figure 4, there is a feedback line (i.e., the third CO₂ exit line 510) from the polishing unit 500 to the cleaning unit 800 so that the third CO₂ rich stream 60 that may be CO₂ rich (i.e., comprising a preponderant portion of CO₂, and a portion of CH₄) is fed to the cleaning unit 800 to start over the process of separation of CO₂ from a gas mixture 1 to be upgraded.

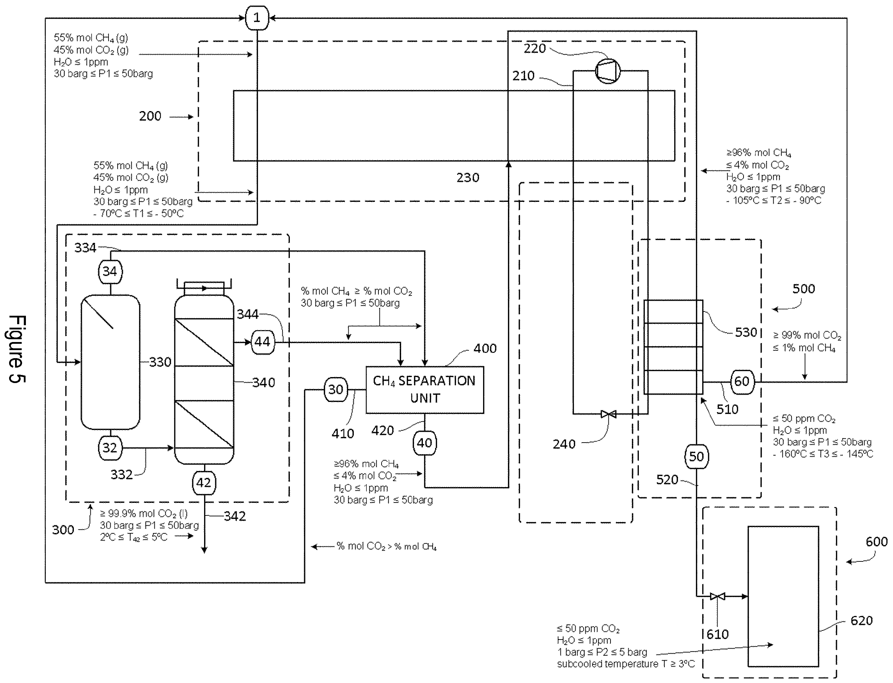

Figure 5 schematically represents a plant 100 to obtain liquid carbon dioxide and liquid methane from a gas mixture 1. Features of figure 5 may be described in combination with the features of any of the examples shown in figures 1 to 4.

In figure 5, the gas mixture 1 to be upgraded may comprise 55 % mol CH₄, 45 % mol CO₂, and an H₂O content of the gas mixture 1 that is equal to or less than 1 ppm. In the example of figure 5, the gas mixture 1 to be upgraded may be at a pressure P1 comprised between 30 barg and 50 barg, for example between 36 barg and 39 barg. Therefore, the gas mixture 1 to be upgraded may be supplied to the cryogenic unit 200 at the pressure comprised e.g., between 36 barg and 39 barg.

In figure 5, the cryogenic unit 200 comprises a mixed refrigerant circuit 210, a refrigerant compressor 220, a cold box 230, and a pressure-reducing device 240 such as a Joule Thomson valve. A mixed refrigerant within the mixed refrigerant circuit 210 may be compressed by the refrigerant compressor 220. The mixed refrigerant may be at least partially condensed before entering the cold box 230 and substantially fully condensed within the cold box 230. The substantially fully condensed mixed refrigerant may be flashed through the pressure-reducing device 240 (e.g., a joule Thomson valve). Therefore, a flash evaporation of the mixed refrigerant may be achieved which may result in at least a partial evaporation of the mixed refrigerant. The at least partial evaporation of the mixed refrigerant may provide a cooling duty across a range of temperatures comprised between - 160°C and 25°C. As a result, the refrigerant mixture may provide latent heat to cool the gas mixture 1 to be upgraded or the received stream.

It may be noted that depending on the ambient temperature, in some examples, the plant 100 may comprise a pre-cooling unit. The pre-cooling unit may comprise a chiller. The pre-cooling unit may be configured to cool down the gas mixture 1 to be upgraded before being supplied to the cryogenic unit 200. Furthermore, the pre-cooling unit may be further configured to cool down the mixed refrigerant of the cryogenic unit 200 before entering the cold box 230. The pre-cooling unit may be in use when the ambient temperature to which the gas mixture 1 to be upgraded or to which the mixed refrigerant may be greater than a predetermined inlet temperature of the cold box 230 (e.g., t > 15°C). When the ambient temperature is higher than the predetermined inlet temperature of the cold box 230, the pre-cooling unit may cool the gas mixture 1 to be upgraded or the mixed refrigerant from ambient temperature to a temperature that is lower than the predetermined inlet temperature of the cold box 230.

By the passage of the gas mixture 1 to be upgraded within the cryogenic unit 200, the gas mixture 1 to be upgraded may be cooled to the first predetermined temperature T1 comprised between - 70°C and - 50°C, for example between - 60°C and - 50°C.

Therefore, the gas mixture 1 to be upgraded that is exited from the cryogenic unit 200 may comprise a temperature between - 70°C and - 50°C, and may comprise the same above-mentioned composition (i.e., 55 % mol CH₄, 45 % mol CO₂, and the H₂O content within the gas mixture 1 is equal to or less than 1 ppm).

In figure 5, the cooled gas mixture 1 to be upgraded is supplied to the CO₂ separation unit 300 to separate at least part of the CO₂ from the cooled gas mixture 1 to be upgraded. In this example of figure 5, the received cooled gas mixture 1 to be upgraded by the CO₂ separation unit 300 may comprise a temperature between - 70°C and - 50°C, and a pressure comprised between 30 barg and 50 barg.

In some examples, the received cooled gas mixture 1 to be upgraded by the CO₂ separation unit 300 may comprise a temperature between - 60°C and - 50°C, and a pressure comprised between 36 barg and 39 barg.

In the example of figure 5, the CO₂ separation unit 300 comprises a flash tank 330 and a distillation column 340. The flash tank 330 may be configured to receive the gas mixture 1 to be upgraded with: the temperature comprised between - 70°C and - 50°C; and the pressure comprised between 30 barg and 50 barg.

The flash tank 330 may be further configured to recover a first flash tank stream 32 from the flash tank 330 through a CO₂ rich flash tank exit line 332. The first flash tank stream 32 may comprise a portion of liquid CO₂ and a portion of liquid CH₄, wherein the portion of liquid CO₂ is greater than the portion of liquid CH₄.

In the example of figure 5, the portion of liquid CO₂ of the first flash tank stream 32 may be comprised between 75% mol and 80% mol, and the portion of liquid CH₄ of the first flash tank stream 32 may be comprised between 20% mol and 25% mol.

The flash tank 330 may be further configured to recover a second flash tank stream 34 from the flash tank 330 through a CH₄ rich flash tank exit line 334. The second flash tank stream 34 may comprise a portion of gaseous CH₄ and a portion of gaseous CO₂; wherein the portion of gaseous CH₄ is greater than the portion of gaseous CO₂.

In the example of figure 5, the portion of gaseous CH₄ of the second flash tank stream 34 may be comprised between 75% mol and 85% mol, and the portion of gaseous CO₂ of the second flash tank stream 34 may be comprised between 15% mol and 25% mol.

Furthermore, the CO₂ separation unit 300 further comprises a distillation column 340 fluidically connected to the flash tank 330 through the CO₂ rich flash tank exit line 332. The distillation column may be configured to: receive the first flash tank stream 32 through the CO₂ rich flash tank exit line 332.

The distillation column 340 may be further configured to recover a first distillation column stream 42 from the distillation column 340 through the CO₂ rich distillation column exit line 342. The first distillation column stream 42 may comprise a final portion of liquid CO₂, wherein the final portion of liquid CO₂ is greater than or equal to 99.9% mol of the first distillation column stream.

The distillation column 340 may be further configured to recover a second distillation column stream 44 from the distillation column 340 through a CH₄ rich distillation column exit line 344. The second distillation column stream 44 may comprise at least a portion of gaseous CH₄ and at least a portion of gaseous CO₂; wherein the at least portion of gaseous CH₄ is greater than the at least portion of gaseous CO₂.

In the example of figure 5, the portion of gaseous CH₄ of the second distillation column stream 44 may be comprised between 75% mol and 85% mol and the portion of gaseous CO₂ of the second distillation column stream 44 may be comprised between 15% mol and 25% mol.

Distillation columns may comprise a vertical shell where separation of the components of the stream may be carried out, and column internals such as trays, plates, or packings that may be used to improve the separation of the different compounds of the stream (e.g., CH₄, CO₂).

Particularly, in the example of figure 5, the distillation column 340 does not comprise a condenser. Therefore, the equilibrium condition of the first plate of the distillation column 340 may be substantially the equilibrium condition of the flash tank 330. Therefore, the liquid fraction of the first flash tank stream 32 received by the distillation column 340 may be recovered at the bottom of the distillation column 340 whereas the gaseous fraction of the first flash tank stream 32 received by the distillation column 340 may be recovered at the top of the distillation column 340. Therefore, the plant 100 may comprise fewer parts and allow to implement simpler systems during gas upgrading.

In some examples, the distillation column 340 may comprise a condenser fluidically connected to a top outlet of the distillation column 340.

In some examples, the distillation column 340 may comprise a reboiler fluidically connected to a bottom outlet of the distillation column 340.

Furthermore, the temperature of the first distillation column stream 42 may be comprised between 2°C and 5°C, for example at 3°C. The temperature of the first distillation column stream 42 exiting the distillation column 340 through the CO₂ rich distillation column exit line 342 is the temperature to which the first distillation column stream 42 may be in stable equilibrium depending on the operating pressure of the distillation column 340 and the temperature of CO₂ so that the CO₂ comprised within the first distillation column stream 42 is in liquid phase. A stable equilibrium may refer to a state in which a system remains for a long period of time, and a disturbance causing the system to deviate from the stable state may not result in the system passing into another state.

In summary, the CO₂ separation unit 300 may provide a first distillation column stream 42 and a second distillation column stream 44.

The first distillation column stream 42 may be exited from the distillation column 340 through the CO₂ rich distillation column exit line 342. The second distillation column stream 44 may be exited from the distillation column 340 through the CH₄ rich distillation column exit line 344. The second distillation column stream 44 may comprise a preponderant portion of gaseous CH₄ and a portion of gaseous CO₂.

The second flash tank stream 34 and / or the second distillation column stream 44 may be further supplied to the CH₄ separation unit 400 (e.g., a membrane upgrading unit, or cryo-upgrading unit) to increase further the CH₄ content of the second flash tank stream 34 and / or the second distillation column stream 44.

In some examples, the CH₄ separation unit 400 may comprise a membrane upgrading unit to be fed with the second flash tank stream 34 through the CH₄ rich flash tank exit line 334 and / or to be fed with the second distillation column stream 44 through the CH₄ rich distillation column exit line 344, wherein the second flash tank stream 34 and / or the second distillation column stream 44 may be heated by the cryogenic unit 200 that cooled the gas mixture 1 to be upgraded prior to being fed to the membrane upgrading unit.

The membrane upgrading unit may comprise one or more membranes. The one or more membranes may be fed with a gas mixture stream comprising a portion of CH₄ (for example 55% mol - 65% mol of the gas mixture), and a portion of CO₂ (for example 45% mol - 35% mol of the gas mixture). The one or more membranes may separate at least part of the CH₄ from the gas mixture stream based on the permeability of CH₄ and the permeability of CO₂. Because the permeability of CH₄ is different from the permeability of CO₂, the one or more membranes may split the gas mixture stream into a permeate fraction and a retentate fraction. The permeate fraction may correspond to the gas portion with high permeability, e.g., the portion of CO₂. The retentate fraction may correspond to the gas portion with low permeability, e.g., the portion of CH₄. Consequently, the membrane upgrading unit may allow selective separation of CO₂ from the gas mixture stream. As a result, the membrane upgrading unit may exit a stream comprising at least 96% mol CH₄.

It may be understood that, in this example, the gas mixture stream may refer to e.g., the second flash tank stream 34 and / or the second distillation column stream 44

Examples of membranes for CO₂ removal from the gas mixture stream may be, for example, a carbon molecular sieve hollow fibre membrane, or a polymer membrane.

In some of these examples, the membrane upgrading unit may be configured to receive the second flash tank stream 34 through the CH₄ rich flash tank exit line 334 and / or the second distillation column stream 44 through the CH₄ rich distillation column exit line 344 at: a temperature comprised between 10°C and 25°C; and a pressure comprised between 30 barg and 50 barg.

The membrane upgrading unit may be further configured to separate at least part of the CH₄ from the second flash tank stream 34 and / or the second distillation column stream 44; and configured to output a second CO₂ rich stream 30 and a second CH₄ rich stream 40.

The second CO₂ rich stream 30 may be exited from the membrane upgrading unit through a second CO₂ exit line 410. The second CO₂ rich stream 30 may comprise a preponderant portion of gaseous CO₂. In some of these examples, the membrane upgrading unit may be fluidically connected to the dehydration unit through the second CO₂ exit line. The dehydration unit may comprise the features of any example of the dehydration unit herein disclosed (referring to the description of figures 1 to 4). Therefore, there may be a feedback line (i.e., the second CO₂ exit line) from the membrane upgrading unit to the dehydration unit so that the second CO₂ rich stream that may be CO₂ rich (i.e., comprising a preponderant portion of CO₂, and a portion of CH₄) may be fed to the dehydration unit to start over the process of separation and liquefaction of CO₂, and CH₄ gas upgrading. It may be noted that in some examples, the membrane upgrading unit may be in fluid connection with a compression unit through the second CO₂ exit line. The compression unit which comprises a compressor, may be configured to compress the second CO₂ rich stream 30 to a pressure comprised between 30 barg and 50 barg. Furthermore, the compression unit may be in fluid connection with the cryogenic unit 200. Therefore, the second CO₂ rich stream 30 may be fed to the cryogenic unit 200 at a pressure comprised between 30 barg and 50 barg. As a result, the portion of CH₄ of the second CO₂ rich stream may be recirculated into the plant 100, avoiding spillage of CH₄.

The second CH₄ rich stream 40 may be exited from the membrane upgrading unit through a second CH₄ exit line 420. The second CH₄ rich stream 40 may comprise a final portion of the gaseous CH₄, wherein the final portion of the gaseous CH₄ is greater than or equal to 96% mol of the second CH₄ rich stream. In some of these examples, the second CH₄ exit line may be fluidically connected to the grid. Therefore, an upgraded methane stream (i.e., the gaseous CH₄ of the second CH₄ rich stream with a final portion of gaseous CH₄ greater than or equal to 96% mol) may readily be injected into the grid for its use.

In some examples, the CH₄ separation unit 400 may comprise a cryo-upgrading unit. The cryo-upgrading unit may comprise a heat exchanger with an inlet and an outlet. The inlet of the heat exchanger may be fed with the second flash tank stream 34 through the CH₄ rich flash tank exit line 334 and / or with the second distillation column stream 44 through the CH₄ rich distillation column exit line 344,

In some of these examples, the heat exchanger may be configured to receive the second flash tank stream 34 through the CH₄ rich flash tank exit line 334 and / or the second distillation column stream 44 through the CH₄ rich distillation column exit line 344. Furthermore, the heat exchanger may be configured to cool the second flash tank stream 34 and / or the second distillation column stream 44 to a fifth predetermined temperature comprised between - 100°C and - 50°C, and separate at least part of the CO₂ in solid phase from the second flash tank stream 34 and / or the second distillation column stream 44; and exit the second CO₂ rich stream 30 through the second CO₂ exit line 410, and exit the second CH₄ rich stream 40 through the second CH₄ exit line 420.

Referring to the first distillation column stream 42, the first distillation column stream 42 exiting the distillation column 340 through the CO₂ rich distillation column exit line 342 may be further cooled to the fourth predetermined temperature T4 comprised between - 40°C and - 25°C, for example at - 30 °C by the cryogenic unit 200 that cooled the gas mixture 1 to be upgraded prior to being fed to a CO₂ storage unit.

Referring to the second CH₄ rich stream 40, the second CH₄ rich stream 40 is an upgraded gas to be polished.

In figure 5, the second CH₄ rich stream 40 to be polished may comprise at least 96% mol CH₄ (e.g., 96% mol - 99.5% mol CH₄), less than 4% mol CO₂ (e.g., 4% mol - 0.5% mol CO₂), and the H₂O content within the second CH₄ rich stream 40 may be up to 1 ppm.

In the example of figure 5, the second CH₄ rich stream 40 to be polished may be at a pressure P1 comprised between 30 barg and 50 barg, for example between 36 barg and 39 barg. Therefore, the second CH₄ rich stream 40 to be polished may be supplied to the cryogenic unit 200 at the pressure comprised e.g., between 36 barg and 39 barg.

By the passage of the second CH₄ rich stream 40 to be polished within the cryogenic unit 200, the second CH₄ rich stream 40 to be polished may be cooled to the second predetermined temperature T2 comprised between - 105°C and - 90°C, for example - 100°C.

Therefore, the second CH₄ rich stream 40 to be polished that is exited from the cryogenic unit 200 may comprise a temperature between - 105°C and - 90°C, and may comprise the same above-mentioned composition (e.g., 96% mol - 99.5% mol CH₄, 4% mol - 0.5% mol CO₂, and the H₂O content of the gas mixture 1 that is equal to or less than 1 ppm).

In figure 5, the cooled second CH₄ rich stream 40 to be polished is supplied to the polishing unit 500 to at least partially separate CO₂ from the cooled second CH₄ rich stream 40 to be polished. In this example of figure 5, the received cooled second CH₄ rich stream 40 to be polished by the polishing unit 500 may comprise a temperature between - 105°C and - 90°C, and a pressure comprised between 30 barg and 50 barg.

In some examples, the received cooled second CH₄ rich stream 40 to be polished by the polishing unit 500 may comprise a temperature - 100°C, and a pressure comprised between 36 barg and 39 barg.

In the example of figure 5, the polishing unit 500 comprises a heat exchanger 530.The heat exchanger 530 comprises an inlet and an outlet. The inlet of the heat exchanger 530 is in fluid communication with the second outlet of the cryogenic unit 200. The heat exchanger 530 may be configured to receive the cooled second CH₄ rich stream 40 with: the temperature comprised between - 105°C and - 90°C; and the pressure comprised between 30 barg and 50 barg.

The heat exchanger 530 may be configured: to cool the cooled second CH₄ rich stream 40 to the third predetermined temperature comprised between - 160°C and - 145°C, for example - 150°C.

In some examples, a filter may be placed downstream the heat exchanger 530. The filter may be in fluid communication with the outlet of the heat exchanger 530, and with the inlet of the CH₄ storage unit 600. The filter may be configured to trap remaining CO₂ in solid phase (through the passage of the second CH₄ rich stream 40 through the heat exchanger 530, the portion of CO₂ is mainly in solid phase) and to prevent CO₂ in solid phase entering the CH₄ storage unit 600. As a result, a reduced solidified amount of CO₂ may be supplied to the CH₄ storage unit 600.

In some examples, the polishing unit 500 may comprise a pressure-reducing device (e.g., a joule Thomson valve) and a phase separator. In these examples, an inlet of the joule Thomson valve is in fluid communication with the second outlet of the cryogenic unit and an outlet of the pressure-reducing device may be in fluid communication with an inlet of the phase separator. Furthermore, an outlet of the phase separator may be in fluid communication with the inlet of the heat exchanger 530.

The pressure-reducing device may decrease the pressure of the received cooled second CH₄ rich stream 40 to a pressure comprised between 12 barg and 16 barg. Consequently, the cooled second CH₄ rich stream 40 may be further cooled to a temperature comprised between - 120°C and - 115°C to which the portion of CO₂ of the cooled second CH₄ rich stream 40 may be in solid phase. The expansion of the cooled second CH₄ rich stream 40 by the Joule-Thomson process, further decreases the temperature of the second CH₄ rich stream 40 to the above commented temperature range (i.e., - 120°C < t < - 145°C). Therefore, the phase separator may receive a stream comprising the portion of CH₄ in liquid phase and the portion of CO₂ in solid phase. The phase separator may be a device to separate a mixture into the constituent phases of the mixture. Therefore, the phase separator may separate the CO₂ in solid phase from the CH₄ in liquid phase. Consequently, the amount of CO₂ to be trapped in solid phase within the heat exchanger 530 may be decreased. Therefore, a batch cycle time corresponding to the elapsed time under which e.g., the heat exchanger 530 may be operated to separate at least part of the CO₂ in solid phase from the cooled second CH₄ rich stream 40 may be increased. As a result, the heat exchanger 530 may saturate at a lower rate than a saturation rate of a heat exchanger which is not in fluid connection with a pressure-reducing device and with a phase separator.

In some of these examples, about 60% of the CO₂ in solid phase may be further trapped within the above commented filter.

In figure 5, the CH₄ storage unit 600 comprises a pressure-reducing device 610 in fluid communication with the outlet of the heat exchanger 530 through the third CH₄ exit line 520, and a tank 620 in fluid communication with the pressure-reducing device 610. The pressure-reducing device 610 may be configured to expand the third CH₄ rich stream 50 to a pressure comprised between 1 barg and 5 barg. In these examples, the pressure-reducing device 610 may be e.g., a Joule Thomson valve.

Due to the CH₄ storage unit 600 being in fluid communication with the outlet of the polishing unit 500, the CH₄ storage unit 600 receives the third CH₄ rich stream 50 comprising the liquid CH₄ with up to 50 ppm of CO₂ and stores the liquid CH₄.

In some examples, when the third CH₄ rich stream 50 is expanded to the pressure comprised between 1 barg and 5 barg, the liquid CH₄ may be subcooled to at least 3 °C. Therefore, the third CH₄ rich stream 50 that is polished (i.e., the liquid CH₄ with up to 50 ppm of CO₂) may readily be transported for its use.

Therefore, the tank 620 may be configured to store the liquid CH₄ with up to 50 ppm of CO₂ at a subcooled temperature of at least 3°C (i.e., subcooled by more than 3 °C with respect to the equilibrium temperature for the pressure of the CH₄ storage unit 600) and at a pressure comprised between 1 barg and 5 barg, for example 3 barg.

It may be noted that the third CH₄ rich stream 50 comprising the liquid CH₄ with up to 50 ppm of CO₂, may be directly supplied to a CH₄ unit to operate the CH₄ in liquid phase (e.g., the grid, or the CH₄ storage unit).

Referring to the heat exchanger 530, upon operation, the heat exchanger 530 may be saturated of CO₂ in solid phase. Therefore, desaturation of the heat exchanger 530 may be achieved by heating (e.g., to ambient temperature) the CO₂ in solid phase with the mixed refrigerant of the cryogenic unit 200 through the mixed refrigerant circuit 210. Consequently, the CO₂ in solid phase may be melted. As a result, the CO₂ may be in liquid phase or gaseous phase after heating. Therefore, a stream comprising the CO₂ in liquid phase or gaseous phase may be exited from the polishing unit. This stream is the third CO₂ rich stream 60 which is exited from the polishing unit 500 through the third CO₂ exit line 510.

In the example of figure 5, the third CO₂ rich stream 60 may comprise at least 99% mol CH₄ and up to 1% mol CH₄. There is a feedback line (i.e., the third CO₂ exit line 510) from the polishing unit 500 to the cryogenic unit 200 so that the third CO₂ rich stream 60 that may be CO₂ rich (i.e., comprising a preponderant portion of CO₂, and a portion of CH₄) may be fed to the cryogenic unit 200 to start over the process of separation of CO₂ from a gas mixture 1 to be upgraded. Consequently, a plant without spilling or loss of the portion of CH₄ during gas polishing, or during separation and liquefaction of the CH₄, may be obtained.

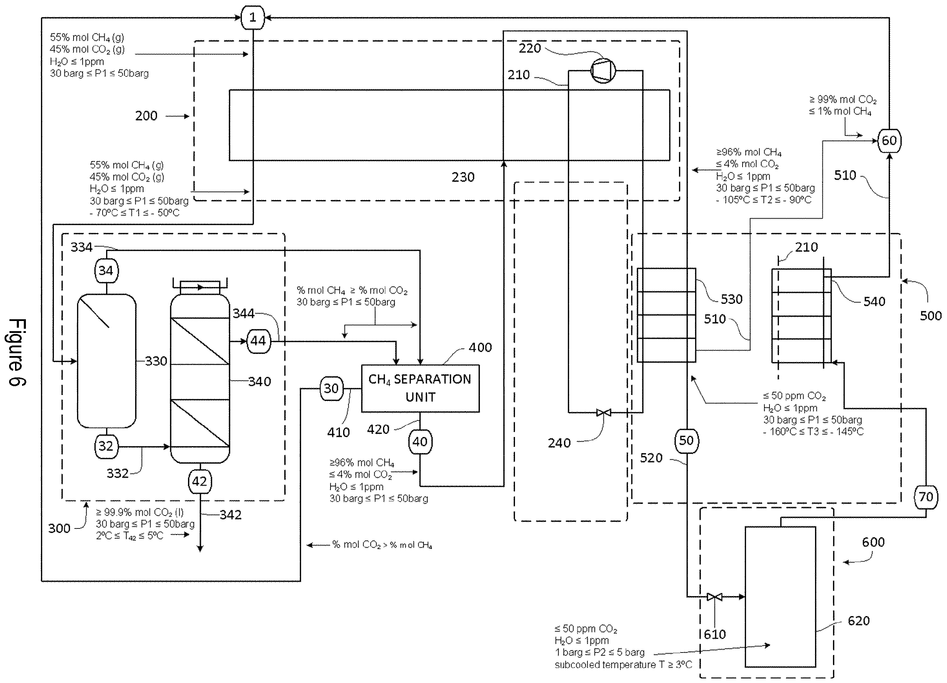

Figure 6 schematically represents a plant 100 to obtain liquid carbon dioxide and liquid methane from a gas mixture 1. Features of figure 6 may be described in combination with the features of any of the examples shown in figures 1 to 5.

In figure 6, an example of a plant 100 to obtain liquid methane from a gas mixture 1 with a continuous gas polishing operation, is shown.

In this example of figure 6, the heat exchanger 530 is under operation (i.e., in operation mode) to separate at least part of the CO₂ in solid phase from the cooled gas mixture (as mentioned in the description referring to figures 1 to 5).

In this example of figure 6, compared to figure 5, the plant 100 represented in figure 6 differs because there is a second heat exchanger 540 which is shown in regeneration mode (as indicated by the dot line).

It may be noted that when a heat exchanger is saturated with CO₂ in solid phase, and the heat exchanger may not achieve separation of CO₂ from the cooled gas mixture. Therefore, the heat exchanger may be placed in regeneration mode.

In regeneration mode, the second heat exchanger 540 may be heated with the mixed refrigerant through the mixed refrigerant circuit 210. Therefore, desaturation may be achieved by heating the CO₂ in solid phase thanks to the mixed refrigerant of the cryogenic unit 200. The CO₂ in solid phase may be heated by the passage of the mixed refrigerant through the second heat exchanger 540. The mixed refrigerant may be at a temperature which enables heating the CO₂ in solid phase and melting the CO₂ in solid phase. As a result, the CO₂ may be in liquid phase or gaseous phase after heating. Therefore, a stream comprising the CO₂ in liquid phase or gaseous phase may be exited from the polishing unit 500. This stream is the third CO₂ rich stream 60 which is exited from the polishing unit 500 through the third CO₂ exit line 510.

Like the second CO₂ rich stream 30, the third CO₂ rich stream 60 may be further supplied to any system intaking a CO₂ rich stream with a preponderant portion of CO₂ and a portion of CH₄ (e.g., at least 99% mol CO₂ and up to 1 % mol CH₄).

After desaturation of the second heat exchanger 540, the second heat exchanger 540 may be placed in operation mode and the heat exchanger 530 may be placed in regeneration mode. In the example of figure 6, the heat exchanger 530 and the second heat exchanger 540 may operate alternatively. While the heat exchanger 530 is in use (i.e., in operation mode) to separate CO₂ in solid phase from the second CH₄ rich stream 40, the second heat exchanger 540 is being regenerated (i.e., in regeneration mode). When the heat exchanger 530 is saturated of CO₂ in solid phase, the second heat exchanger 540 may be used to continue polishing the second CH₄ rich stream 40 and the heat exchanger 530 may be regenerated. Consequently, continuous (i.e., uninterrupted) operation of the polishing unit 500 may be achieved.

Furthermore, the heat exchanger 530 and the second heat exchanger 540 may operate alternatively depending on a batch cycle time corresponding to the elapsed time under which e.g., the first heat exchanger 530 may be operated to separate (i.e., in operation mode) at least part of the CO₂ in solid phase from the cooled second CH₄ rich stream 40 while the second heat exchanger 540 may be in regeneration mode.

In some examples, as shown in figure 6, the second heat exchanger 540 (in regeneration mode) may be supplied with a CH₄ storage stream 70. The CH₄ storage stream 70 proceeds from the CH₄ storage unit 600.

The CH₄ storage unit 600 may store the liquid CH₄ with up to 50 ppm of CO₂ at a subcooled temperature of at least 3°C. Within the CH₄ storage unit 600, at least a part of the liquid CH₄ may be in a vapor phase. Consequently, the CH₄ storage stream 70 may comprise the portion of CH₄ in vapor phase. As mentioned above, the CH₄ storage unit 600 may store the liquid CH₄ at a subcooled temperature of at least 3°C. Therefore, the CH₄ storage stream 70 may be at the subcooled temperature of at least 3°C.

Thus, the second heat exchanger 540 may be flushed and cooled by the passage of the CH₄ storage stream 70. As a result, the CH₄ storage stream 70 may allow residual CO₂ trapped within the second heat exchanger 540 to be removed from the second heat exchanger 540. As a result, the residual CO₂ trapped within the second heat exchanger 540 may be exited within the third CO₂ rich stream 60 from the polishing unit 500 through the third CO₂ exit line 510.

Throughout the description, and particularly referring to the description of figures 5 to 7, it may be understood that the term "first distillation column stream 42" may be equivalent to the term "first CO₂ rich stream 10" (used in the description referring to figures 1 to 4). These terms may be used interchangeably.

Throughout the description, and particularly referring to the description of figures 5 to 7, it may be understood that the term "second distillation column stream 44" may be equivalent to the term "first CH₄ rich stream 20" (used in the description referring to figures 1 to 4). These terms may be used interchangeably.

Throughout the description, and particularly referring to the description of figures 5 to 7, it may be understood that the term "the first CO₂ exit line 310" may be equivalent to the term "CO₂ rich distillation column exit line 342" (used in the description referring to figures 1 to 4). These terms may be used interchangeably.

Throughout the description, and particularly referring to the description of figures 5 to 7, it may be understood that the term "the first CH₄ exit line 320" may be equivalent to the term "CH₄ rich distillation column exit line 344" (used in the description referring to figures 1 to 4). These terms may be used interchangeably.

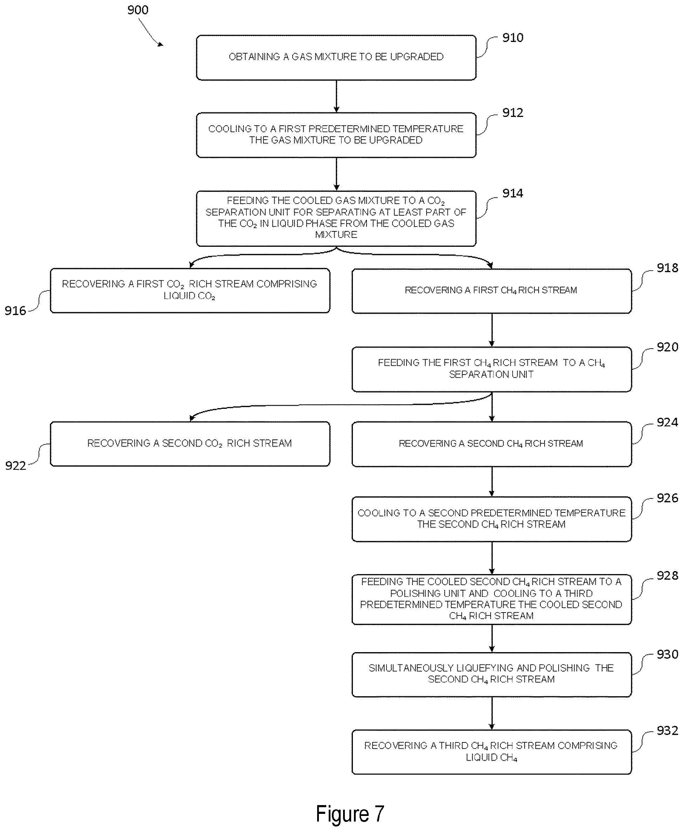

Figure 7 schematically shows a block diagram of a method 900 of obtaining liquid carbon dioxide and liquid methane from a gas mixture according to an example of the present disclosure. Features of figure 7 may be described in combination with the features of any of the examples shown in figures 1 to 6.

At block 910, the block 910 may comprise obtaining a gas mixture to be upgraded, the gas mixture to be upgraded comprising 1 ppm of H₂O or less than 1 ppm of H₂O.

At block 912, the block 912 may comprise feeding the gas mixture 1 to be upgraded and cooling to a first predetermined temperature the gas mixture 1 to be upgraded.

At block 914, the block 914 may comprise feeding the cooled gas mixture 1 to be upgraded to a CO₂ separation unit for separating at least part of the CO₂ in liquid phase from the cooled gas mixture.

At block 916, the block 916 may comprise recovering a first CO₂ rich stream 10 comprising liquid CO₂ from the CO₂ separation unit 300 through a first CO₂ exit line 310.

At block 918, the block 918 may comprise recovering a first CH₄ rich stream 20 comprising a portion of gaseous CH₄ and a portion of gaseous CO₂ from the CO₂ separation unit 300 through a first CH₄ exit line 320.

At block 920, the block 920 may comprise feeding the first CH₄ rich stream 20 to a CH₄ separation unit 400 for separating at least part of the CO₂ from the first CH₄ stream.

At block 922, the block 922 may comprise recovering a second CO₂ rich stream 30 comprising a preponderant portion of gaseous CO₂, through the second CO₂ exit line 410.

At block 924, the block 924 may comprise recovering a second CH₄ rich stream 40 comprising a final portion of the gaseous CH₄, wherein the final portion of the gaseous CH₄ is greater than or equal to 96% mol of the second CH₄ rich stream, through the second CH₄ exit line 420.

At block 926, the block 926 may comprise feeding the second CH₄ rich stream 40 to the cryogenic unit 200 and cooling to a second predetermined temperature the second CH₄ rich stream 40.

At block 928, the block 928 may comprise feeding the cooled second CH₄ rich stream 40 to a polishing unit 500 to cool the cooled second CH₄ rich stream 40 to a third predetermined temperature.

At block 930, the block 930 may comprise simultaneously liquefying and polishing the second CH₄ rich stream 40 by separating at least part of the CO₂ in solid phase from the second CH₄ rich stream 40 cooled to the third predetermined temperature.

At block 932, the block 932 may comprise recovering a third CH₄ rich stream 50 comprising liquid CH₄, through a third CH₄ exit line 520.

In some examples, the block 910 may further comprise obtaining the gas mixture 1 to be upgraded at a pressure comprised between 30 barg and 50 barg, for example between 36 barg and 39 barg.

In some examples, the first predetermined temperature to which the cryogenic unit 200 is configured to cool the gas mixture 1 to be upgraded may be comprised between - 70°C and - 50°C, for example between - 60°C and - 50°C (as aforementioned in the description referring to figures 1 to 6).

In some examples, the block 914 may comprise: feeding the cooled gas mixture 1 to a flash tank 330, the cooled gas mixture 1 to the first predetermined temperature comprised between - 70°C and - 50°C and to a pressure comprised between 30 barg and 50 barg; recovering: a first flash tank stream 32 from the flash tank 330 through a CO₂ rich flash tank exit line 332, the first flash tank stream 32 comprising a portion of liquid CO₂ and a portion of liquid CH₄, wherein the portion of liquid CO₂ is greater than the portion of liquid CH₄; and a second flash tank stream 34 from the flash tank 330 through a CH₄ rich flash tank exit line 334, the second flash tank stream 34 comprising a portion of gaseous CH₄ and a portion of gaseous CO₂; wherein the portion of gaseous CH₄ is greater than the portion of gaseous CO₂; and feeding the first flash tank stream 32 to a distillation column 340 fluidically connected to the flash tank 330 through the CO₂ rich flash tank exit line 332.

In some of these examples, the block 916 may comprise recovering the first CO₂ rich stream 10 from the distillation column 340 through the first CO₂ exit line 310, the first CO₂ rich stream 10 comprising a final portion of liquid CO₂, wherein the final portion of the liquid CO₂ is greater than or equal to 99.9% mol of the first CO₂ rich stream 10.

In some of these examples, the block 918 may comprise recovering the first CH₄ rich stream 20 from the distillation column 340 through the first CH₄ exit line 320, the first CH₄ rich stream 20 comprising the portion of gaseous CH₄ and the portion of CO₂, wherein the portion of gaseous CH₄ is greater than the portion of gaseous CO₂.

In some examples, the second predetermined temperature to which the cryogenic unit is configured to cool the second CH₄ rich stream 40 may be comprised between - 105°C and - 90°C (as aforementioned in the description referring to figures 1 to 5).

In some of these examples, the second predetermined temperature to which the cryogenic unit 200 is configured to cool the second CH₄ rich stream 40 may be - 100°C (as aforementioned in the description referring to figures 1 to 5).

In some examples, the third predetermined temperature to which the cryogenic unit is configured to cool the cooled second CH₄ rich stream 40 may be comprised between - 160°C and - 145°C (as aforementioned in the description referring to figures 1 to 5).

In some of these examples, the third predetermined temperature to which the cryogenic unit 200 is configured to cool the cooled second CH₄ rich stream 40 may be - 150°C (as aforementioned in the description referring to figures 1 to 5).

In some examples, the method 900 may comprise reducing the pressure of the third CH₄ rich stream 50 comprising liquid CH₄ to a pressure comprised between 1 barg and 5 barg, and subcooling at least 3°C the liquid CH₄ by using a pressure-reducing device (as aforementioned in the description referring to figures 1 to 6).

In some examples, the recovered third CH₄ rich stream 50 may comprise a final portion of liquid CH₄, and a final portion of liquid CO₂ wherein the final portion of the liquid CO₂ is less than or equal to 50 ppm of CO₂.

In some examples, the method 900 may comprise heating the polishing unit 500 and melting the CO₂ in solid phase so that the heated CO₂ is in liquid phase or gaseous phase. In some of these examples, the method 900 further may comprise exiting a third CO₂ rich stream 60 comprising a portion of the CO₂ in liquid phase or gaseous phase and a portion of CH₄, through a third CO₂ exit line 510. In these examples, the third CO₂ rich stream 60 may comprise at least 99% mol CH₄ and up to 1% mol CH₄.

In some examples, the method 900 may comprise operating alternatively the heat exchanger 530 and the second heat exchanger 540 depending on a batch cycle time.

In some of these examples, the heat exchanger 530 and the second heat exchanger 540 may be alternatively configured: to separate at least part of the CO₂ in solid phase from the second CH₄ rich stream 40, or to receive heat by the passage of the mixed refrigerant whereby the received heat melts the CO₂ in solid phase, and exiting the third CO₂ rich stream 60 through the third CO₂ exit line 510.

In some examples, the method 900 may comprise feeding the cooled first CO₂ rich stream 10 comprising liquid CO₂ to a CO₂ storage unit through the first CO₂ exit line 310.

In some examples, the method 900 may comprise feeding the third CH₄ rich stream 50 comprising liquid CH₄ to a CH₄ storage unit 600 through the third CH₄ exit line 520 and storing the liquid CH₄.

For reasons of completeness, various aspects of the present disclosure are set out in the following numbered clauses:
1. A plant to obtain liquid methane from a gas mixture comprising CO₂ and CH₄, the plant comprising:
   a cryogenic unit comprising a first inlet to receive the gas mixture to be upgraded with a pressure comprised between 30 barg and 50 barg; and a first outlet to exit the gas mixture to a first predetermined temperature comprised between - 70°C and - 50°C to which the cryogenic unit is configured to cool the gas mixture to be upgraded;
   a CO₂ separation unit in fluid communication with the first outlet of the cryogenic unit, wherein the CO₂ separation unit comprises a first CO₂ exit line and a first CH₄ exit line, the CO₂ separation unit configured to separate at least part of the CO₂ in liquid phase from the cooled gas mixture, and to exit:
      ▪ a first CO₂ rich stream comprising liquid CO₂, through the first CO₂ exit line; and
      ▪ a first CH₄ rich stream comprising a portion of gaseous CH₄ and a portion of gaseous CO₂, through the first CH₄ exit line;
   a CH₄ separation unit in fluid communication with the CO₂ separation unit through the first CH₄ exit line, wherein the CH₄ separation unit comprises a second CO₂ exit line and a second CH₄ exit line, the CH₄ separation unit configured to separate at least part of the CO₂ from the first CH₄ rich stream; and to exit:
      ▪ a second CO₂ rich stream comprising a preponderant portion of gaseous CO₂, through the second CO₂ exit line;
      ▪ a second CH₄ rich stream comprising a final portion of the gaseous CH₄, wherein the final portion of the gaseous CH₄ is greater than or equal to 96% mol of the second CH₄ rich stream, through the second CH₄ exit line;
      wherein the second CH₄ exit line is in fluid communication with a second inlet of the cryogenic unit, the second inlet to receive the second CH₄ rich stream to be polished; and wherein a second outlet of the cryogenic unit exits the second CH₄ rich stream to a second predetermined temperature comprised between - 105°C and - 90°C to which the cryogenic unit is configured to cool the second CH₄ rich stream to be polished;
   a polishing unit comprising a heat exchanger with an inlet and an outlet, the inlet of the heat exchanger in fluid communication with the second outlet of the cryogenic unit, the heat exchanger configured:
   ▪ to cool the cooled second CH₄ rich stream to a third predetermined temperature comprised between - 160°C and - 145°C, and
   ▪ to separate at least part of the CO₂ in solid phase from the cooled second CH₄ rich stream, and
   ▪ to exit a third CH₄ rich stream comprising liquid CH₄, through a third CH₄ exit line; and
   a CH₄ storage unit comprising an inlet and an outlet, the inlet of the CH₄ storage unit in fluid communication with the polishing unit through the third CH₄ exit line, the CH₄ storage unit to receive the third CH₄ rich stream comprising liquid CH₄ and to store the liquid CH₄.
2. The plant according to clause 1,
   wherein the first CO₂ exit line is in fluid communication with a third inlet of the cryogenic unit, the third inlet to receive the first CO₂ rich stream; and wherein a third outlet of the cryogenic unit exits the first CO₂ rich stream to a fourth predetermined temperature to which the cryogenic unit is configured to cool the first CO₂ rich stream; and
   the plant comprises a CO₂ storage unit in fluid communication with the third outlet of the cryogenic unit, the CO₂ storage unit to receive the cooled first CO₂ rich stream comprising liquid CO₂ and to store the liquid CO₂.
3. The plant according to clause 2, wherein the fourth predetermined temperature to which the cryogenic unit is configured to cool the first CO₂ rich stream, is comprised between - 40°C and - 25°C.
4. The plant according to any of clauses 1 to 3, wherein the CO₂ storage unit comprises a pressure-reducing device configured to expand the liquid CO₂ being fed to the CO₂ storage unit at a pressure comprised between 10 barg and 25 barg.
5. The plant according to any of clauses 1 to 4, wherein the CH₄ storage unit comprises a pressure-reducing device configured to expand the liquid CH₄ being fed to the CH₄ storage unit at a pressure comprised between 1 barg and 5 barg.
6. The plant according to any of clauses 1 to 5, the plant comprising a desulphurization unit coupled to the cryogenic unit, the desulphurization unit configured to:
   receive the gas mixture to be upgraded with a pressure comprised between 0.2 barg and 15 barg; and
   remove H₂S from the gas mixture to be upgraded so that the gas mixture to be upgraded comprises 4 ppm of H₂S or less than 4 ppm of H₂S.
7. The plant according to clause 6, wherein the desulphurization unit comprises:
   a NaOH scrubbing column configured to reduce an H₂S content of the gas mixture to be upgraded to a resulting H₂S content which is less than or equal to 100 ppm of H₂S; and
   an active carbon filter coupled to the NaOH scrubbing column, the active carbon filter configured to reduce the resulting H₂S content of the gas mixture to be upgraded to a final H₂S content which is less than or equal to 4 ppm of H₂S.
8. The plant according to clauses 6 or 7,
   wherein the desulphurization unit comprises an inlet and an outlet, the inlet of the desulphurization unit is configured to receive the gas mixture to be upgraded; and the outlet of the desulphurization unit is fluidically connected to the first inlet of the cryogenic unit so that the gas mixture to be upgraded comprising that is fed to the first inlet of the cryogenic unit comprises 4 ppm of H₂S or less than 4 ppm of H₂S.
9. The plant according to any of clauses 1 to 8, the plant comprising a dehydration unit coupled to the cryogenic unit, the dehydration unit configured to:
   receive the gas mixture to be upgraded with a pressure comprised between 0.2 barg and 15 barg; and
   remove moisture from the gas mixture to be upgraded so that the gas mixture to be upgraded comprises 1 ppm of H₂O or less than 1 ppm of H₂O.
10. The plant according to clause 9, wherein the dehydration unit comprises:
   one or more adsorbers configured to reduce an H₂O content of the gas mixture to be upgraded, to a final H₂O content which is less than or equal to 1 ppm of H₂O.
11. The plant according to clause 10, wherein the one or more adsorbers are selected to achieve that the gas mixture to be upgraded comprises 1 ppm of H₂O or less than 1 ppm of H₂O.
12. The plant according to any of clauses 9 to 11,
   wherein the dehydration unit comprises an inlet and an outlet, the inlet of the dehydration unit is configured to receive the gas mixture to be upgraded; and the outlet of the dehydration unit is fluidically connected to the first inlet of the cryogenic unit so that the gas mixture to be upgraded that is fed to the inlet of the cryogenic unit comprises 1 ppm of H₂O or less than 1 ppm of H₂O.
13. The plant according to any of clauses 1 to 5, the plant comprising a cleaning unit coupled to the cryogenic unit, the cleaning unit comprising:
   a desulphurization unit, the desulphurization unit configured to:
      receive the gas mixture to be upgraded with a pressure comprised between 0.2 barg and 15 barg; and
      remove H₂S from the gas mixture to be upgraded so that the gas mixture to be upgraded comprises 4 ppm of H₂S or less than 4 ppm of H₂S; and
   a dehydration unit coupled to the desulphurization unit; the dehydration unit configured to:
      receive the gas mixture to be upgraded with a pressure comprised between 0.2 barg and 15 barg; and
      remove moisture from the gas mixture to be upgraded so that the gas mixture to be upgraded comprises 1 ppm of H₂O or less than 1 ppm of H₂O.
14. The plant according to clause 13, wherein the desulphurization unit comprises:
   a NaOH scrubbing column configured to reduce an H₂S content of the gas mixture to be upgraded to a resulting H₂S content which is less than or equal to 100 ppm of H₂S; and
   an active carbon filter coupled to the NaOH scrubbing column, the active carbon filter configured to reduce the resulting H₂S content of the gas mixture to be upgraded to a final H₂S content which is less than or equal to 4 ppm of H₂S.
15. The plant according to clause 13 or 14, wherein the dehydration unit comprises:
   one or more adsorbers configured to reduce an H₂O content of the gas mixture to be upgraded to a final H₂O content which is less than or equal to 1 ppm of H₂O.
16. The plant according to any of clauses 13 to 15,
   wherein the cleaning unit comprises an inlet and an outlet, the inlet of the cleaning unit is configured to receive the gas mixture to be upgraded; and the outlet of the cleaning unit is fluidically connected to the first inlet of the cryogenic unit.
17. The plant according to any of clauses 1 to 16, the plant comprising a first compression unit coupled to the cryogenic unit, the first compression unit configured to compress the gas mixture to be upgraded at a first compression pressure.
18. The plant according to clause 17, wherein the first compression pressure is comprised between 0.2 barg and 15 barg.
19. The plant according to clause 17, wherein the first compression pressure is comprised between 10 barg and 15 barg.
20. The plant according to clause any of clauses 1 to 19, the plant comprising a second compression unit coupled to the cryogenic unit, the second compression unit configured to compress the gas mixture to be upgraded at a second compression pressure.
21. The plant according to clause 20, wherein the second compression pressure is greater than the first compression pressure.
22. The plant according to clauses 20 or 21, wherein the second compression pressure is comprised between 36 barg and 39 barg.
23. The plant according to any of clauses 1 to 22, wherein the CO₂ separation unit comprises:
   a flash tank comprising:
      ∘ a flash tank inlet in fluid communication with the first outlet of the cryogenic unit, the flash tank inlet to receive the gas mixture to be upgraded;
      ∘ a first flash tank outlet to exit a first flash tank stream from the flash tank through a CO₂ rich flash tank exit line, the first flash tank stream comprising a portion of liquid CO₂ and a portion of liquid CH₄, wherein the portion of liquid CO₂ is greater than the portion of liquid CH₄; and
      ∘ a second flash tank outlet to exit a second flash tank stream from the flash tank through a CH₄ rich flash tank exit line, the second flash tank stream comprising a portion of gaseous CH₄ and a portion of gaseous CO₂; wherein the portion of gaseous CH₄ is greater than the portion of gaseous CO₂;
   a distillation column comprising:
      ∘ a distillation column inlet in fluid communication with the first flash tank outlet through the CO₂ rich flash tank exit line, the distillation column inlet to receive the first flash tank stream;
      ∘ a first distillation column outlet to exit the first CO2 rich stream from the distillation column through the first CO₂ exit line, the first CO2 rich stream comprising a final portion of liquid CO₂, wherein the final portion of the liquid CO₂ is greater than or equal to 99.9% mol of the first CO2 rich stream; and
      ∘ a second distillation column outlet to exit the first CH₄ rich stream from the distillation column through the first CH₄ exit line, the first CH₄ rich stream comprising the portion of gaseous CH₄ and the portion of CO₂ through the first CH₄ exit line, wherein the portion of gaseous CH₄ is greater than the portion of gaseous CO₂.
24. The plant according to clause 23,
   wherein the flash tank is configured to:
      receive the gas mixture to be upgraded with:
         ▪ the temperature comprised between - 70°C and - 50°C; and
         ▪ the pressure comprised between 30 barg and 50 barg;
      recover:
         ▪ a first flash tank stream from the flash tank through a CO₂ rich flash tank exit line, the first flash tank stream comprising a portion of liquid CO₂ and a portion of liquid CH₄, wherein the portion of liquid CO₂ is greater than the portion of liquid CH₄; and
         ▪ a second flash tank stream from the flash tank through a CH₄ rich flash tank exit line, the second flash tank stream comprising a portion of gaseous CH₄ and a portion of gaseous CO₂; wherein the portion of gaseous CH₄ is greater than the portion of gaseous CO₂;
   wherein the distillation column is configured to:
      receive the first flash tank stream through the CO₂ rich flash tank exit line; and
      recover:
         ▪ the first CO₂ rich stream from the distillation column through the first CO₂ exit line, the first CO₂ rich stream comprising a final portion of the liquid CO₂, wherein the final portion of the liquid CO₂ is greater than or equal to 99.9% mol of the first CO₂ rich stream; and
         ▪ the first CH₄ rich stream from the distillation column through the first CH₄ exit line, the first CH₄ rich stream comprising the portion of gaseous CH₄ and the portion of CO₂ through the first CH₄ exit line, wherein the portion of gaseous CH₄ is greater than the portion of gaseous CO₂.
25. The plant according to clauses 23 or 24, wherein the first CO₂ rich stream comprising the liquid CO₂ is at a temperature comprised between 2°C and 5°C.
26. The plant according to any of clauses 23 to 25, wherein the CH₄ separation unit comprises:
   a membrane upgrading unit to be fed with the second flash tank stream through the CH₄ rich flash tank exit line and / or to be fed with the first CH₄ rich stream through the first CH₄ exit line, wherein the second flash tank stream and / or the first CH₄ rich stream is heated by the cryogenic unit that cooled the gas mixture to be upgraded prior to being fed to the membrane upgrading unit.
27. The plant according to clause 26 wherein the membrane upgrading unit is configured to:
   receive the second flash tank stream through the CH₄ rich flash tank exit line and / or the first CH₄ rich stream through the first CH₄ exit line at:
      ▪ a temperature comprised between 10°C and 25°C; and
      ▪ a pressure comprised between 30 barg and 50 barg;
   separate at least part of the CO₂ from the second flash tank stream and / or the first CH₄ rich stream; and exit:
      ▪ the second CO₂ rich stream through the second CO₂ exit line; and
      ▪ the second CH₄ rich stream through the second CH₄ exit line.
28. The plant according to clause 9 and 27,
   wherein the dehydration unit is fluidically connected to the membrane upgrading unit through the second CO₂ exit line; and
   wherein the dehydration unit is at least partially fed with the second CO₂ rich stream through the second CO₂ exit line.
29. The plant according to any of clauses 20 to 25, wherein the CH₄ separation unit comprises:
   a cryo-upgrading unit comprising a heat exchanger with an inlet and an outlet, the inlet of the heat exchanger in fluid communication with the CO₂ separation unit through the CH₄ rich flash tank exit line and / or through the first CH₄ exit line.
30. The plant according to clause 29, wherein the heat exchanger is configured to:
   receive the second flash tank stream through the CH₄ rich flash tank exit line and / or the first CH₄ rich stream through the first CH₄ exit line;
   cool the cooled second flash tank stream and / or the cooled first CH₄ rich stream to a fifth predetermined temperature comprised between - 100°C and - 50°C, and
   separate at least part of the CO₂ in solid phase from the second flash tank stream and / or the first CH₄ rich stream; and
   exit:
      ▪ the second CO₂ rich stream through the second CO₂ exit line; and
      ▪ the second CH₄ rich stream through the second CH₄ exit line.
31. A method of obtaining liquid methane from a gas mixture, the method comprising:
   obtaining a gas mixture to be upgraded, the gas mixture to be upgraded comprising 1 ppm of H₂O or less than 1 ppm of H₂O;
   feeding the gas mixture to a cryogenic unit and cooling to a first predetermined temperature the gas mixture to be upgraded;
   feeding the cooled gas mixture to a CO₂ separation unit for separating at least part of the CO₂ in liquid phase from the cooled gas mixture;
   recovering a first CO₂ rich stream comprising liquid CO₂ from the CO₂ separation unit through a first CO₂ exit line;
   recovering a first CH₄ rich stream comprising a portion of gaseous CH₄ and a portion of gaseous CO₂ from the CO₂ separation unit through a first CH₄ exit line;
   feeding the first CH₄ rich stream to a CH₄ separation unit for separating at least part of the CO₂ from the first CH₄ rich stream:
      recovering a second CO₂ rich stream comprising a preponderant portion of gaseous CO₂, through the second CO₂ exit line;
      recovering a second CH₄ rich stream comprising a final portion of the gaseous CH₄, wherein the final portion of the gaseous CH₄ is greater than or equal to 96% mol of the second CH₄ rich stream, through the second CH₄ exit line;
      feeding the second CH₄ rich stream to the cryogenic unit and cooling to a second predetermined temperature the second CH₄ rich stream;
      feeding the cooled second CH₄ rich stream to a polishing unit to cool the cooled second CH₄ rich stream to a third predetermined temperature;
      simultaneously liquefying and polishing the second CH₄ rich stream by separating at least part of the CO₂ in solid phase from the second CH₄ rich stream cooled to the third predetermined temperature; and
      recovering a third CH₄ rich stream comprising liquid CH₄, through a third CH₄ exit line.
32. The method according to clause 31, wherein a pressure to which the gas mixture to be upgraded is obtained, is comprised between 30 barg and 50 barg.
33. The method according to clause 31, wherein a pressure to which the gas mixture to be upgraded is obtained, is comprised between 36 barg and 39 barg.
34. The method according to any of clauses 31 to 33, wherein the first predetermined temperature to which the cryogenic unit is configured to cool the gas mixture to be upgraded, is comprised between - 70°C and - 50°C.
35. The method according to any of clauses 31 to 33, wherein the first predetermined temperature to which the cryogenic unit is configured to cool the gas mixture to be upgraded, is comprised between - 60°C and - 50°C.
36. The method according to any of clauses 31 to 35,
   wherein the feeding the cooled gas mixture to a CO₂ separation unit for separating at least part of the CO₂ in liquid phase from the cooled gas mixture comprises:
      ∘ feeding the cooled gas mixture to a flash tank, the cooled gas mixture to the first predetermined temperature comprised between - 70°C and - 50°C and to a pressure comprised between 30 barg and 50 barg;
      ∘ recovering:
         ▪ a first flash tank stream from the flash tank through a CO₂ rich flash tank exit line, the first flash tank stream comprising a portion of liquid CO₂ and a portion of liquid CH₄, wherein the portion of liquid CO₂ is greater than the portion of liquid CH₄; and
         ▪ a second flash tank stream from the flash tank through a CH₄ rich flash tank exit line, the second flash tank stream comprising a portion of gaseous CH₄ and a portion of gaseous CO₂; wherein the portion of gaseous CH₄ is greater than the portion of gaseous CO₂;
      ∘ feeding the first flash tank stream to a distillation column fluidically connected to the flash tank through the CO₂ rich flash tank exit line; and
   wherein recovering a first CO₂ rich stream comprising liquid CO₂ from the CO₂ separation unit through a first CO₂ exit line comprises:
      ∘ recovering the first CO₂ rich stream from the distillation column through the first CO₂ exit line, the first CO₂ rich stream comprising a final portion of liquid CO₂, wherein the final portion of the liquid CO₂ is greater than or equal to 99.9% mol of the first CO₂ rich stream; and
   wherein recovering a first CH₄ rich stream comprising a portion of gaseous CH₄ and a portion of gaseous CO₂ from the CO₂ separation unit through a first CH₄ exit line comprises:
      ∘ recovering the first CH₄ rich stream from the distillation column through the first CH₄ exit line, the first CH₄ rich stream comprising the portion of gaseous CH₄ and the portion of CO₂, wherein the portion of gaseous CH₄ is greater than the portion of gaseous CO₂.
37. The method according to any of clauses 31 to 36, wherein the second predetermined temperature to which the cryogenic unit is configured to cool the second CH₄ rich stream may be comprised between - 105°C and - 90°C.
38. The method according to any of clauses 31 to 36, wherein the second predetermined temperature to which the cryogenic unit is configured to cool the second CH₄ rich stream may be - 100°C.
39. The method according to any of clauses 31 to 38, wherein the third predetermined temperature is comprised between - 160°C and - 145°C.
40. The method according to any of clauses 31 to 38, wherein the third predetermined temperature is - 150°C.
41. The method according to any of clauses 31 to 40, the method comprising:
   reducing the pressure of the third CH₄ rich stream comprising liquid CH₄ to a pressure comprised between 1 barg and 5 barg, and
   subcooling at least 3°C the liquid CH₄.
42. The method according to any of clauses 31 to 41, wherein the recovered third CH₄ rich stream comprises a final portion of liquid CH₄, and a final portion of liquid CO₂ wherein the final portion of the liquid CO₂ is less than or equal to 50 ppm of CO₂.
43. The method according to any of clauses 31 to 42, the method comprising:
   heating the polishing unit and melting the CO₂ in solid phase so that the heated CO₂ is in liquid phase or gaseous phase.
44. The method according to clause 43, the method comprising:
   exiting a third CO₂ rich stream comprising a portion of the CO₂ in liquid phase or gaseous phase and a portion of CH₄, through a third CO₂ exit line.
45. The method according to any of clauses 31 to 44, the method comprising:
   operating alternatively a first heat exchanger and a second heat exchanger depending on a batch cycle time.
46. The method according to clauses 43 and 45,
   wherein the first heat exchanger and the second heat exchanger are alternatively configured:
   ▪ to separate at least part of the CO₂ in solid phase from the gas mixture, or
   ▪ to receive heat by the passage of the mixed refrigerant whereby the received heat melts the CO₂ in solid phase, and exiting the third CO₂ rich stream through the third CO₂ exit line.
47. The method according to any of clauses 31 to 46, the method comprising:
   feeding the cooled first CO₂ rich stream comprising liquid CO₂ to a CO₂ storage unit through the first CO₂ exit line.
48. The method according to any of clauses 31 to 47, the method comprising:
   feeding the third CH₄ rich stream comprising liquid CH₄ to a CH₄ storage unit through the third CH₄ exit line and storing the liquid CH₄.

Although only a number of examples have been disclosed herein, other alternatives, modifications, uses and/or equivalents thereof are possible. Furthermore, all possible combinations of the described examples are also covered. Thus, the scope of the present disclosure should not be limited by particular examples, but should be determined only by a fair reading of the claims that follow. If reference signs related to drawings are placed in parentheses in a claim, they are solely for attempting to increase the intelligibility of the claim, and shall not be construed as limiting the scope of the claim.

## Claims

1. A plant to obtain liquid methane from a gas mixture comprising CO₂ and CH₄, the plant comprising:
a cryogenic unit comprising a first inlet to receive the gas mixture to be upgraded with a pressure comprised between 30 barg and 50 barg; and a first outlet to exit the gas mixture to a first predetermined temperature comprised between - 70°C and - 50°C to which the cryogenic unit is configured to cool the gas mixture to be upgraded;
a CO₂ separation unit in fluid communication with the first outlet of the cryogenic unit, wherein the CO₂ separation unit comprises a first CO₂ exit line and a first CH₄ exit line, the CO₂ separation unit configured to separate at least part of the CO₂ in liquid phase from the cooled gas mixture, and to exit:
▪ a first CO₂ rich stream comprising liquid CO₂, through the first CO₂ exit line; and
▪ a first CH₄ rich stream comprising a portion of gaseous CH₄ and a portion of gaseous CO₂, through the first CH₄ exit line;
a CH₄ separation unit in fluid communication with the CO₂ separation unit through the first CH₄ exit line,
wherein the CH₄ separation unit comprises a second CO₂ exit line and a second CH₄ exit line, the CH₄ separation unit configured to separate at least part of the CO₂ from the first CH₄ rich stream; and to exit:
▪ a second CO₂ rich stream comprising a preponderant portion of gaseous CO₂, through the second CO₂ exit line;
▪ a second CH₄ rich stream comprising a final portion of the gaseous CH₄, wherein the final portion of the gaseous CH₄ is greater than or equal to 96% mol of the second CH₄ rich stream, through the second CH₄ exit line;
wherein the second CH₄ exit line is in fluid communication with a second inlet of the cryogenic unit, the second inlet to receive the second CH₄ rich stream to be polished; and wherein a second outlet of the cryogenic unit exits the second CH₄ rich stream to a second predetermined temperature comprised between - 105°C and - 90°C to which the cryogenic unit is configured to cool the second CH₄ rich stream to be polished;
a polishing unit comprising a heat exchanger with an inlet and an outlet, the inlet of the heat exchanger in fluid communication with the second outlet of the cryogenic unit, the heat exchanger configured:
▪ to cool the cooled second CH₄ rich stream to a third predetermined temperature comprised between - 160°C and - 145°C, and
▪ to separate at least part of the CO₂ in solid phase from the cooled second CH₄ rich stream, and
▪ to exit a third CH₄ rich stream comprising liquid CH₄, through a third CH₄ exit line; and
a CH₄ storage unit comprising an inlet and an outlet, the inlet of the CH₄ storage unit in fluid communication with the polishing unit through the third CH₄ exit line, the CH₄ storage unit to receive the third CH₄ rich stream comprising liquid CH₄ and to store the liquid CH₄.

2. The plant according to claim 1,
wherein the first CO₂ exit line is in fluid communication with a third inlet of the cryogenic unit, the third inlet to receive the first CO₂ rich stream; and wherein a third outlet of the cryogenic unit exits the first CO₂ rich stream to a fourth predetermined temperature to which the cryogenic unit is configured to cool the first CO₂ rich stream; and
the plant comprises a CO₂ storage unit in fluid communication with the third outlet of the cryogenic unit, the CO₂ storage unit to receive the cooled first CO₂ rich stream comprising liquid CO₂ and to store the liquid CO₂.

3. The plant according to claims 1 or 2, the plant comprising a dehydration unit coupled to the cryogenic unit, the dehydration unit configured to remove moisture from the gas mixture to be upgraded so that the gas mixture to be upgraded comprises 1 ppm of H₂O or less than 1 ppm of H₂O.

4. The plant according to claim 3,
wherein the dehydration unit comprises an inlet and an outlet, the inlet of the dehydration unit is configured to receive the gas mixture to be upgraded; and the outlet of the dehydration unit is fluidically connected to the first inlet of the cryogenic unit so that the gas mixture to be upgraded that is fed to the inlet of the cryogenic unit comprises 1 ppm of H₂O or less than 1 ppm of H₂O.

5. The plant according to any of claims 1 to 4, wherein the CO₂ separation unit comprises:
a flash tank comprising:
∘ a flash tank inlet in fluid communication with the first outlet of the cryogenic unit, the flash tank inlet to receive the gas mixture to be upgraded;
∘ a first flash tank outlet to exit a first flash tank stream from the flash tank through a CO₂ rich flash tank exit line, the first flash tank stream comprising a portion of liquid CO₂ and a portion of liquid CH₄, wherein the portion of liquid CO₂ is greater than the portion of liquid CH₄; and
∘ a second flash tank outlet to exit a second flash tank stream from the flash tank through a CH₄ rich flash tank exit line, the second flash tank stream comprising a portion of gaseous CH₄ and a portion of gaseous CO₂; wherein the portion of gaseous CH₄ is greater than the portion of gaseous CO₂;
a distillation column comprising:
∘ a distillation column inlet in fluid communication with the first flash tank outlet through the CO₂ rich flash tank exit line, the distillation column inlet to receive the first flash tank stream;
∘ a first distillation column outlet to exit the first CO2 rich stream from the distillation column through the first CO₂ exit line, the first CO2 rich stream comprising a final portion of liquid CO₂, wherein the final portion of the liquid CO₂ is greater than or equal to 99.9% mol of the first CO2 rich stream; and
∘ a second distillation column outlet to exit the first CH₄ rich stream from the distillation column through the first CH₄ exit line, the first CH₄ rich stream comprising the portion of gaseous CH₄ and the portion of CO₂ through the first CH₄ exit line, wherein the portion of gaseous CH₄ is greater than the portion of gaseous CO₂.

6. The plant according to claim 5, wherein the CH₄ separation unit comprises:
a membrane upgrading unit to be fed with the second flash tank stream through the CH₄ rich flash tank exit line and / or to be fed with the first CH₄ rich stream through the first CH₄ exit line, wherein the second flash tank stream and / or the first CH₄ rich stream is heated by the cryogenic unit that cooled the gas mixture to be upgraded prior to being fed to the membrane upgrading unit.

7. The plant according to claim 3 and 6,
wherein the dehydration unit is fluidically connected to the membrane upgrading unit through the second CO₂ exit line; and
wherein the dehydration unit is at least partially fed with the second CO₂ rich stream through the second CO₂ exit line.

8. The plant according to claim 5, wherein the CH₄ separation unit comprises:
a cryo-upgrading unit comprising a heat exchanger with an inlet and an outlet, the inlet of the heat exchanger in fluid communication with the CO₂ separation unit through the CH₄ rich flash tank exit line and / or through the first CH₄ exit line.

9. A method of obtaining liquid methane from a gas mixture, the method comprising:
obtaining a gas mixture to be upgraded, the gas mixture to be upgraded comprising 1 ppm of H₂O or less than 1 ppm of H₂O;
feeding the gas mixture to a cryogenic unit and cooling to a first predetermined temperature the gas mixture to be upgraded;
feeding the cooled gas mixture to a CO₂ separation unit for separating at least part of the CO₂ in liquid phase from the cooled gas mixture;
recovering a first CO₂ rich stream comprising liquid CO₂ from the CO₂ separation unit through a first CO₂ exit line;
recovering a first CH₄ rich stream comprising a portion of gaseous CH₄ and a portion of gaseous CO₂ from the CO₂ separation unit through a first CH₄ exit line;
feeding the first CH₄ rich stream to a CH₄ separation unit for separating at least part of the CO₂ from the first CH₄ rich stream:
recovering a second CO₂ rich stream comprising a preponderant portion of gaseous CO₂, through a second CO₂ exit line;
recovering a second CH₄ rich stream comprising a final portion of the gaseous CH₄, wherein the final portion of the gaseous CH₄ is greater than or equal to 96% mol of the second CH₄ rich stream, through a second CH₄ exit line;
feeding the second CH₄ rich stream to the cryogenic unit and cooling to a second predetermined temperature the second CH₄ rich stream;
feeding the cooled second CH₄ rich stream to a polishing unit to cool the cooled second CH₄ rich stream to a third predetermined temperature;
simultaneously liquefying and polishing the second CH₄ rich stream by separating at least part of the CO₂ in solid phase from the second CH₄ rich stream cooled to the third predetermined temperature; and
recovering a third CH₄ rich stream comprising liquid CH₄, through a third CH₄ exit line.

10. The method according to claim 9,
wherein the feeding the cooled gas mixture to a CO₂ separation unit for separating at least part of the CO₂ in liquid phase from the cooled gas mixture comprises:
∘ feeding the cooled gas mixture to a flash tank, the cooled gas mixture to the first predetermined temperature comprised between - 70°C and - 50°C and to a pressure comprised between 30 barg and 50 barg;
∘ recovering:
▪ a first flash tank stream from the flash tank through a CO₂ rich flash tank exit line, the first flash tank stream comprising a portion of liquid CO₂ and a portion of liquid CH₄, wherein the portion of liquid CO₂ is greater than the portion of liquid CH₄; and
▪ a second flash tank stream from the flash tank through a CH₄ rich flash tank exit line, the second flash tank stream comprising a portion of gaseous CH₄ and a portion of gaseous CO₂; wherein the portion of gaseous CH₄ is greater than the portion of gaseous CO₂;
∘ feeding the first flash tank stream to a distillation column fluidically connected to the flash tank through the CO₂ rich flash tank exit line; and
wherein recovering a first CO₂ rich stream comprising liquid CO₂ from the CO₂ separation unit through a first CO₂ exit line comprises:
∘ recovering the first CO₂ rich stream from the distillation column through the first CO₂ exit line, the first CO₂ rich stream comprising a final portion of liquid CO₂, wherein the final portion of the liquid CO₂ is greater than or equal to 99.9% mol of the first CO₂ rich stream; and
wherein recovering a first CH₄ rich stream comprising a portion of gaseous CH₄ and a portion of gaseous CO₂ from the CO₂ separation unit through a first CH₄ exit line comprises:
∘ recovering the first CH₄ rich stream from the distillation column through the first CH₄ exit line, the first CH₄ rich stream comprising the portion of gaseous CH₄ and the portion of CO₂, wherein the portion of gaseous CH₄ is greater than the portion of gaseous CO₂.

11. The method according to claims 9 or 10, wherein a pressure to which the gas mixture to be upgraded is obtained, is comprised between 30 barg and 50 barg.

12. The method according to any of claims 9 to 11, wherein the first predetermined temperature to which the cryogenic unit is configured to cool the gas mixture to be upgraded, is comprised between - 70°C and - 50°C.

13. The method according to any of claims 9 to 12, wherein the second predetermined temperature to which the cryogenic unit is configured to cool the second CH₄ rich stream may be comprised between - 105°C and - 90°C.

14. The method according to any of claims 9 to 13, wherein the third predetermined temperature is comprised between - 160°C and - 145°C.

15. The method according to any of claims 9 to 14, wherein the recovered third CH₄ rich stream comprises a final portion of liquid CH₄, and a final portion of liquid CO₂ wherein the final portion of the liquid CO₂ is less than or equal to 50 ppm of CO₂.
